(19) Europäisches Patentamt
European Patent Office
Office européen des brevets

(11) EP 4 037 056 B1

(12) EUROPÄISCHE PATENTSCHRIFT

(45) Veröffentlichungstag und Bekanntmachung des Hinweises auf die Patenterteilung:
**25.03.2026 Patentblatt 2026/13**

(21) Anmeldenummer: **21154308.7**

(22) Anmeldetag: **29.01.2021**

(51) Internationale Patentklassifikation (IPC):
***H01M 10/0568*** *(2010.01)* ***H01M 10/0563*** *(2010.01)*
***H01M 4/66*** *(2006.01)* ***H01M 4/80*** *(2006.01)*
***H01M 4/62*** *(2006.01)* ***H01M 4/131*** *(2010.01)*
***H01M 4/133*** *(2010.01)* ***H01M 4/485*** *(2010.01)*
***H01M 4/505*** *(2010.01)* ***H01M 4/525*** *(2010.01)*
***H01M 4/58*** *(2010.01)* ***H01M 4/587*** *(2010.01)*
***H01M 10/0525*** *(2010.01)* ***H01M 10/054*** *(2010.01)*
***H01M 10/0567*** *(2010.01)* ***H01M 10/0585*** *(2010.01)*

(52) Gemeinsame Patentklassifikation (CPC):
**H01M 10/0568; H01M 4/485; H01M 4/505; H01M 4/525; H01M 4/582; H01M 4/5825; H01M 4/587; H01M 4/622; H01M 4/623; H01M 4/661; H01M 4/808; H01M 10/0525; H01M 10/054; H01M 10/0563; H01M 10/0567;**
(Forts.)

# (54) AUF SO2-BASIERENDER ELEKTROLYT FÜR EINE WIEDERAUFLADBARE BATTERIEZELLE UND WIEDERAUFLADBARE BATTERIEZELLE

SO2-BASED ELECTROLYTE FOR RECHARGEABLE BATTERY CELL AND RECHARGEABLE BATTERY CELL

ÉLECTROLYTE À BASE DE SO2 POUR UN ÉLÉMENT DE BATTERIE RECHARGEABLE ET ÉLÉMENT DE BATTERIE RECHARGEABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.08.2022 Patentblatt 2022/31**

(73) Patentinhaber: **Innolith Technology AG**
**4052 Basel (CH)**

(72) Erfinder:
- **ZINCK, Laurent**
  **67470 Mothern (FR)**
- **PSZOLLA, Christian**
  **76669 Bad Schönborn (DE)**
- **BUSCH, Rebecca**
  **76646 Bruchsal (DE)**

(74) Vertreter: **LBP Lemcke, Brommer & Partner Patentanwälte mbB**
**Siegfried-Kühn-Straße 4**
**76135 Karlsruhe (DE)**

(56) Entgegenhaltungen:
**EP-A1- 3 734 724**
**WO-A1-2020/013667**
**WO-A1-2021/006704**
**JP-B2- 4 306 858**
**US-A- 4 510 220**
**US-A1- 2015 093 632**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 037 056 B1

(52) Gemeinsame Patentklassifikation (CPC): (Forts.)
**H01M 10/0585;** H01M 2300/002; Y02E 60/10

## Beschreibung

Die Erfindung betrifft einen auf $SO_2$-basierenden Elektrolyt für eine wiederaufladbare Batteriezelle und eine wiederaufladbare Batteriezelle.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Diese elektrochemischen Prozesse führen direkt oder indirekt zur Abgabe von Elektronen in den externen Stromkreis oder zur Aufnahme von Elektronen aus dem externen Stromkreis. Wiederaufladbare Batteriezellen, welche Lithium als aktives Metall enthalten, werden auch als Lithium-Ionen-Zellen bezeichnet. Die Energiedichte dieser Lithium-Ionen-Zellen kann entweder durch Steigerung der spezifischen Kapazität der Elektroden oder durch Steigerung der Zellspannung erhöht werden.

Sowohl die positive als auch die negative Elektrode von Lithium-Ionen-Zellen sind als Insertionselektroden ausgebildet. Unter dem Begriff "Insertionselektrode" werden im Sinne der vorliegenden Erfindung Elektroden verstanden, welche eine Kristallstruktur besitzen, in die Ionen des aktiven Materials beim Betrieb der Lithium-Ionen-Zelle ein- und ausgelagert werden können. Das bedeutet, dass sich die Elektrodenprozesse nicht nur an der Oberfläche der Elektroden, sondern auch innerhalb der Kristallstruktur abspielen können.

Beide Elektroden weisen eine Dicke von in der Regel weniger als 100 $\mu$m auf und sind daher sehr dünn ausgebildet. Beim Laden der Lithium-Ionen-Zelle werden die Ionen des aktiven Metalls aus der positiven Elektrode ausgelagert und in die negative Elektrode eingelagert. Beim Entladen der Lithium-Ionen-Zelle läuft der umgekehrte Prozess ab.

Auch der Elektrolyt ist ein wichtiges Funktionselement jeder wiederaufladbaren Batteriezelle. Er enthält meistens ein Lösungsmittel oder Lösungsmittelgemisch und mindestens ein Leitsalz. Feststoffelektrolyte oder ionische Flüssigkeiten enthalten zum Beispiel kein Lösungsmittel, sondern nur ein Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben, das heißt (d.h.) wiederholt aufgeladen und entladen werden kann.

Die aus dem Stand der Technik bekannten Lithium-Ionen-Zellen enthalten einen Elektrolyten, der aus einem in einem organischen Lösungsmittel oder Lösungsmittelgemisch und einem darin gelösten Leitsalz besteht. Bei dem Leitsalz handelt es sich um ein Lithiumsalz wie beispielsweise Lithiumhexafluorophosphat ($LiPF_6$). Das Lösungsmittelgemisch kann beispielsweise Ethylencarbonat (EC) enthalten. Der Elektrolyt LP57, der die Zusammensetzung 1 M $LiPF_6$ in EC:EMC 3:7 aufweist, ist ein Beispiel für einen solchen Elektrolyten. Aufgrund des organischen Lösungsmittels oder Lösungsmittelgemischs werden derartige Lithium-Ionen-Zellen auch als organische Lithium-Ionen-Zellen bezeichnet. Neben dem im Stand der Technik häufig verwendeten Lithiumhexafluorophosphat ($LiPF_6$) als Leitsalz werden auch andere Leitsalze für organische Lithium-Ionen-Zellen beschrieben. So beschreibt zum Beispiel das Dokument JP 4 306858 B2 (im Nachfolgenden bezeichnet als [V1]) Leitsalze, die Tetraalkoxy- oder Tetraaryloxyboratsalze sind, die fluoriert oder teilfluoriert sein können. Aus der JP 2001 143750 A (im Nachfolgenden bezeichnet als [V2]) gehen fluorierte oder teilfluorierte Tetraalkoxyboratsalze und Tetraalkoxyaluminatsalze als Leitsalze hervor. In diesen Dokumenten [V1] und [V2] werden die beschriebenen Leitsalze in organischen Lösungsmitteln oder Lösungsmittelgemischen gelöst und in organischen Lithium-Ionen-Zellen eingesetzt. Die negative Elektrode vieler organischer Lithium-Ionen-Zellen besteht aus einer Kohlenstoffbeschichtung, welche auf ein Ableitelement aus Kupfer aufgetragen ist. Das Ableitelement stellt den erforderlichen elektronisch leitenden Anschluss zwischen der Kohlenstoffbeschichtung und dem externen Stromkreis her. Die positive Elektrode besteht aus Lithiumkobaltoxid ($LiCoO_2$), welches auf ein Ableitelement aus Aluminium aufgetragen ist.

Es ist seit langem bekannt, dass das ungewollte Überladen von organischen Lithium-Ionen-Zellen zu einer irreversiblen Zersetzung von Elektrolytkomponenten führt. Dabei findet die oxidative Zersetzung des organischen Lösungsmittels und/oder des Leitsalzes an der Oberfläche der positiven Elektrode statt. Die während dieser Zersetzung gebildete Reaktionswärme und die dabei entstehenden gasförmigen Produkte sind für den darauffolgenden, sogenannten "Thermal Runaway" (englisch für "thermisches Durchgehen") und die dadurch resultierende Zerstörung der organischen Lithium-Ionen-Zelle verantwortlich. Die überwiegende Mehrheit an Ladeprotokollen für diese organischen Lithium-Ionen-Zellen zieht die Zellspannung als Indikator für das Ladeende heran. Hierbei sind Unfälle durch den Thermal Runaway besonders wahrscheinlich bei der Verwendung von Multizellen-Batteriepacks, in denen mehrere organische Lithium-Ionen-Zellen mit nicht übereinstimmenden Kapazitäten in Reihe geschaltet werden.

Deshalb sind organische Lithium-Ionen-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Lithium-Ionen-Zelle Feuer fängt oder sogar explodiert, bildet das organische Lösungsmittel des Elektrolyten ein brennbares Material. Ein weiterer Nachteil von organischen Lithium-Ionen-Zellen besteht darin, dass etwaige in Anwesenheit von Restmengen an Wasser entstehende Hydrolyseprodukte gegenüber den Zellkomponenten der wiederaufladbaren Batteriezelle sehr aggressiv sind. Die zuvor beschriebenen Probleme im Hinblick auf die Stabilität und die langfristige Betriebssicherheit sind besonders schwerwiegend bei der Entwicklung von organischen Lithium-Ionen-Zellen, die zum einen sehr gute elektrische Energie- und Leistungsdaten und zum anderen eine sehr hohe Betriebssicherheit und Lebensdauer, insbesondere eine hohe Zahl nutzbarer Lade- und Entladezyklen aufweisen.

Eine aus dem Stand der Technik bekannte Weiterentwicklung sieht daher die Verwendung eines Elektrolyten auf Schwefeldioxid ($SO_2$)-Basis anstatt eines organischen Elektrolyten für wiederaufladbare Batteriezellen vor. Wiederaufladbare Batteriezellen, welche eieinen auf $SO_2$-basierenden Elektrolyten enthalten, weisen unter anderem eine hohe ionische Leitfähigkeit auf. Unter dem Begriff "auf $SO_2$-basierender Elektrolyt" ist ein Elektrolyt zu verstehen, der $SO_2$ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch $SO_2$ gewährleistet ist. Das $SO_2$ dient also als Lösungsmittel für das Leitsalz. Das Leitsalz kann mit dem gasförmigen $SO_2$ einen flüssigen Solvatkomplex bilden, wobei das $SO_2$ gebunden und der Dampfdruck gegenüber dem reinen $SO_2$ merklich gesenkt wird. Es entstehen Elektrolyte mit niederem Dampfdruck. Derartige Elektrolyten auf $SO_2$-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden.

Beispiele für auf $SO_2$-basierenden Elektrolyte offenbaren die WO 2020/013667 A1 und die WO 2021/006704 A1. Die WO 2020/013667 A1 beschreibt eine wiederaufladbare Lithiumbatterie mit einer positiven Elektrode, einer negativen Elektrode, einem dazwischenliegenden Separator und einem auf $SO_2$-basierenden Elektrolyt in Kombination mit einer negativen Elektrode, bei der das Kohlenstoffmaterial mit Titanoxid beschichtet ist. In den Experimenten wird ein $LiAlCl_4$* 3 $SO_2$-Elektrolyt verwendet,

Die WO 2021/006704 A1 offenbart einen auf $SO_2$-basierenden Elektrolyten der zwei verschiedene Leitsalze der allgemeinen Formel MNX-n($SO_2$) besitzt. (mit M=Alkalimetall; N= mindestens ein Metall ausgewählt aus der der Alkalimetalle, Übergangs-, oder Post-Übergangsmetallen; X=Halogen). Es wird ein auf $SO_2$-basierender Elektrolyt mit der Zusammensetzung $LiAlCl_4$*3$SO_2$ und $NaAlCl_4$*2$SO_2$ beschrieben.

Beispielsweise geht aus der EP 1 201 004 B1 (im Nachfolgenden bezeichnet als [V3]) ein auf $SO_2$-basierenden Elektrolyt mit der Zusammensetzung $LiAlCl_4$ * $SO_2$ in Kombination mit einer positiven Elektrode aus $LiCoO_2$ hervor. Zur Vermeidung von störenden Zersetzungsreaktionen bei der Überladung der wiederaufladbaren Batteriezelle ab einem Potential von 4,1 bis 4,2 Volt, wie beispielsweise die unerwünschte Bildung von Chlor ($Cl_2$) aus Lithiumtetrachloroaluminat ($LiAlCl_4$), schlägt die [V3] die Verwendung eines zusätzlichen Salzes vor.

Auch die EP 2534719 B1 (im Nachfolgenden bezeichnet als [V4]) offenbart einen auf $SO_2$-basierenden Elektrolyten mit unter anderem $LiAlCl_4$ als Leitsalz. Dieses $LiAlCl_4$ bildet mit dem $SO_2$ beispielsweise Komplexe der Formel $LiAlCl_4$* 1,5 mol $SO_2$ oder $LiAlCl_4$* 6 mol $SO_2$. Als positive Elektrode wird Lithiumeisenphosphat ($LiFePO_4$) verwendet. $LiFePO_4$ hat ein geringeres Ladepotential (3,7 V) im Vergleich zu $LiCoO_2$ (4,2 V). Die Problematik der unerwünschten Überladereaktionen tritt in dieser wiederaufladbaren Batteriezelle nicht auf, da für den Elektrolyten schädliche Potentiale von 4,1 Volt nicht erreicht werden.

Eine Weiterentwicklung der [V5] in Bezug auf die positive Elektrode ist in der EP 3 734 724 A1 beschrieben. In demselben $SO_2$-basierten Elektrolyten werden mit schwefel-dotiertem Lithiumeisenphosphat verbesserte Ergebnisse erzielt. Auch hier tritt die die Problematik der unerwünschten Reaktionen des Ableitelements nicht, da obere Potentiale von maximal 3,7 Volt erreicht werden.

Ein Nachteil, der unter anderem auch bei diesen auf $SO_2$-basierenden Elektrolyten auftritt, besteht darin, dass etwaige in Anwesenheit von Restmengen an Wasser entstehende Hydrolyseprodukte mit den Zellkomponenten der wiederaufladbaren Batteriezelle reagieren und dadurch zur Bildung von unerwünschten Nebenprodukten führen. Aufgrund dessen muss bei der Herstellung derartiger wiederaufladbare Batteriezellen mit einem auf $SO_2$-basierenden

Elektrolyten auf eine Minimierung des im Elektrolyten und den Zellkomponenten enthaltenen Restwassergehalts geachtet werden.

Ein weiteres Problem bei den auf $SO_2$-basierenden Elektrolyten besteht darin, dass viele, insbesondere auch für organische Lithium-Ionen-Zellen bekannte Leitsalze nicht in $SO_2$ löslich sind.

So berichtet das US-Patent US 4,510,220. dass organischen Co-Lösungsmittel in auf $SO_2$-basierenden Elektrolyten eingesetzt werden, um Leitsalze, die sich sonst nicht in $SO_2$ lösen, in Lösung zu bringen. Allerdings neigen organischen Materialien dazu, an irreversiblen Reaktionen beteiligt zu sein. $SO_2$-basierte Elektrolyte ohne organische Co-Lösungsmittel, erfordern die Verwendung von Elektrolytsalzen, die sowohl im $SO_2$, welches im Allgemeinen ein schlechtes Lösungsmittel ist, allein löslich sind und zudem eine verwertbare leitfähige Elektrolytlösung liefern. Allein Salze wie Tetrachloraluminate, Tetra-chlorogallate, Tetrachloroindate sowie Clovoborate der Alkali- oder Erdalkalimetalle erwiesen sich in $SO_2$ als nützlich (Clovoborate sind jedoch sehr teuer). Der Fokus in diesem US-Patent US 4,510,220 liegt auf einer Batteriezelle mit einer $PbS_2$-Kathode und einem auf $SO_2$-basierenden Elektrolyten der Zusammensetzung $LiAlCl_4{*}3SO_2$ oder $LiGaCl_4{*}3SO_2$.

Im Rahmen der Erfindung wurden Messungen von Löslichkeiten verschiedener Leitsalze in $SO_2$ durchgeführt. Tabelle 1 zeigt die Ergebnisse. Die Messungen ergaben, dass $SO_2$ ein schlechtes Lösungsmittel für viele Salze ist, wie z.B. Lithiumfluorid (LiF), Lithiumbromid (LiBr), Lithiumsulfat ($Li_2SO_4$), Lithiumhexafluoroarsenat ($LiAsF_6$), Lithiumtetrafluorborat ($LiBF_4$), Trilithiumhexafluoroaluminat ($Li_3AlF_6$), Lithiumhexafluoroantimonat ($LiSbF_6$), Lithium-bis(trifluoromethansulfonyl)imid (LiTFSI), Lithiummetaborat ($LiBO_2$), Lithiumaluminat ($LiAlO_2$), Lithiumtriflat ($LiCF_3SO_3$) und Lithiumchlorsulfonat ($LiSO_3Cl$). Die Löslichkeiten dieser Salze liegen in $SO_2$ bei ca. $10^{-2}$ - $10^{-4}$ mol/L (Tabelle 1). Bei diesen geringen Konzentrationen kann davon ausgegangen werden, dass allenfalls nur geringe Leitfähigkeiten vorliegen, die für den sinnvollen Betrieb einer wiederaufladbaren Batteriezelle nicht ausreichend sind.

Tabelle 1: Löslichkeiten verschiedener Salze in SO2

| Salz | Löslichkeit / mol/L in $SO_2$ | Salz | Löslichkeit / mol/L in $SO_2$ |
|---|---|---|---|
| LiF | $2{,}1\cdot10^{-3}$ | $LiPF_6$ | $1{,}5\cdot10^{-2}$ |
| LiBr | $4.9\cdot10^{-3}$ | $LiSbF_6$ | $2.8\cdot10^{-4}$ |
| $Li_2SO_4$ | $2.7\cdot10^{-4}$ | $CF_3SO_2NLiSO_2CF_3$ | $1{,}5\cdot10^{-2}$ |
| $Li_3PO_4$ | - | $LiBO_2$ | $2.6\cdot10^{-4}$ |
| $Li_3AlF_6$ | $2{,}3\cdot10^{-3}$ | $LiAlO_2$ | $4.3\cdot10^{-4}$ |
| $LiBF_4$ | $1.7\cdot10^{-3}$ | $LiCF_3SO_3$ | $6.3\cdot10^{-4}$ |
| $LiAsF_6$ | $1{,}4\cdot10^{-3}$ | | |

Um die Einsatzmöglichkeiten sowie Eigenschaften von auf $SO_2$-basierenden Elektrolyten und wiederaufladbaren Batteriezellen, die diesen Elektrolyten enthalten, weiter zu verbessern, liegt der vorliegenden Erfindung einerseits die Aufgabe zugrunde, einen auf $SO_2$-basierenden Elektrolyten anzugeben, der gegenüber den aus dem Stand der Technik bekannten Elektrolyten

- ein breites elektrochemisches Fenster hat, sodass keine oxidative Elektrolytzersetzung an der positiven Elektrode auftritt;
- eine stabile Deckschicht auf der negativen Elektrode aufbaut, wobei die Deckschichtkapazität niedrig sein sollte und im weiteren Betrieb keine weitere reduktive Elektrolytzersetzung an der negativen Elektrode auftritt;
- durch ein breites elektrochemisches Fenster die Möglichkeit bietet, wiederaufladbare Batteriezellen mit Hochvoltkathoden zu betreiben;
- eine für Leitsalze gute Löslichkeit besitzt und damit ein guter Ionenleiter und elektronischer Isolator ist, damit der Ionentransport erleichtert und die Selbstentladung auf ein Minimum beschränkt werden kann;
- auch gegenüber anderen Komponenten der wiederaufladbaren Batteriezelle, wie Separatoren, Elektrodenmaterialien und Zellverpackungsmaterialien, inert ist,
- gegen verschiedene Missbräuche, wie elektrische, mechanische oder thermische, robust ist und
- eine gesteigerte Stabilität gegenüber Restmengen an Wasser in den Zellkomponenten von wiederaufladbaren Batteriezellen aufweist.

Derartige Elektrolyte sollen insbesondere in wiederaufladbaren Batteriezellen anwendbar sein, die gleichzeitig sehr gute elektrische Energie- und Leistungsdaten, eine hohe Betriebssicherheit und Lebensdauer, insbesondere eine hohe Zahl nutzbarer Lade- und Entladezyklen besitzen, ohne dass sich hierbei der Elektrolyt im Betrieb der wiederaufladbaren Batteriezelle zersetzt.

Andererseits besteht die Aufgabe der vorliegenden Erfindung darin, eine wiederaufladbare Batteriezelle anzugeben, die einen auf $SO_2$-basierenden Elektrolyten enthält und gegenüber den aus dem Stand der Technik bekannten wiederaufladbaren Batteriezellen

- verbesserte elektrische Leistungsdaten, insbesondere eine hohe Energiedichte,
- eine verbesserte Überladefähigkeit und Tiefentladefähigkeit,
- eine geringere Selbstentladung,
- eine gesteigerte Lebensdauer, insbesondere eine hohe Zahl nutzbarer Lade- und Entladezyklen,
- ein verringertes Gesamtgewicht,
- eine erhöhte Betriebssicherheit, auch unter den erschwerten Umweltbedingungen in einem Fahrzeug, und
- verringerte Produktionskosten

aufweist.

Gelöst wird diese Aufgabe durch einen auf $SO_2$-basierenden Elektrolyten mit den Merkmalen des Anspruchs 1 sowie einer wiederaufladbare Batteriezelle mit den Merkmalen des Anspruchs ’15. Vorteilhafte Ausgestaltungen des erfindungsgemäßen Elektrolyten sind in den Ansprüchen 2 bis 14 definiert. Die Ansprüche 16 bis 25 beschreiben vorteilhafte Weiterbildungen der erfindungsgemäßen wiederaufladbaren Batteriezelle.

Ein erfindungsgemäßer, auf $SO_2$-basierender Elektrolyt für eine wiederaufladbare Batteriezelle umfasst zumindest ein erstes Leitsalz, welches die Formel (I)

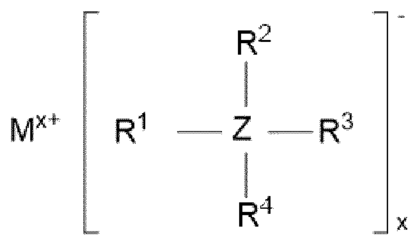

Formel (I)

aufweist, wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^1$ und $R^2$ unabhängig voneinander ausgewählt sind aus der Gruppe, die gebildet wird von einem Halogenatom, einer Hydroxygruppe, einer chemischen Gruppe $-OR^5$ und einem Chelatliganden, der mindestens von zwei der Substituenten $R^1$, $R^2$, $R^3$ und $R^4$ gemeinsam gebildet wird und an Z koordiniert ist;
- der Substituent $R^3$ ausgewählt ist aus der Gruppe, die gebildet wird von einer Hydroxygruppe, einer chemischen Gruppe $-OR^5$ und einem Chelatliganden, der mindestens von zwei der Substituenten $R^1$, $R^2$, $R^3$ und $R^4$ gemeinsam gebildet wird und an Z koordiniert ist;
- der Substituent $R^4$ ausgewählt ist aus der Gruppe, die gebildet wird von einem Halogenatom, einer Hydroxygruppe und einem Chelatliganden, der mindestens von zwei der Substituenten $R^1$, $R^2$, $R^3$ und $R^4$ gemeinsam gebildet wird und an Z koordiniert ist;
- der Substituent $R^5$ ausgewählt ist aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_{5}$-$C_{14}$ Heteroaryl; und
- Z Aluminium oder Bor ist, und

die Stoffmengenkonzentration des ersten Leitsalzes im Bereich von 0,05 mol/l bis 10 mol/l bezogen auf das Gesamtvolumen des Elektrolyten ist.

Somit sind die Substituenten $R^1$, $R^2$, $R^3$ und $R^4$ unabhängig voneinander ausgewählt aus der Gruppe, die gebildet wird von dem Halogenatom, der Hydroxygruppe (-OH) und der chemischen Gruppe $-OR^5$, wobei $R^1$, $R^2$, $R^3$ und $R^4$ weder vier Halogenatome noch vier chemische Gruppen $-OR^5$, insbesondere Alkoxygruppen sind. Unter der Formulierung "Chelatligand, der mindestens von zwei der Substituenten $R^1$, $R^2$, $R^3$ und $R^4$ gemeinsam gebildet wird und an Z koordiniert ist" ist im Sinne der vorliegenden Erfindung zu verstehen, dass zumindest zwei der Substituenten $R^1$, $R^2$, $R^3$ und $R^4$ untereinander verbrückt sein können, wobei diese Verbrückung von zwei Substituenten zu der Bildung

eines zweizähnigen Chelatliganden führt. Beispielsweise kann der Chelatligand zweizähnig gemäß der Formel -O-$R^5$-O- ausgebildet sein. Zur Ausbildung dieses Chelatliganden -O-$R^5$-O-kann aus struktureller Hinsicht der erste Substituent $R^1$ bevorzugt eine $OR^5$-Gruppe und der zweite Substituent $R^2$ bevorzugt eine Hydroxygruppe sein, welche in ihrem verbrückten Zustand miteinander durch Ausbildung einer chemischen Bindung verbunden sind und daher die zuvor genannte Formel -O-$R^5$-O- aufweisen. Solche Chelatliganden können beispielsweise die folgenden Strukturformeln aufweisen:

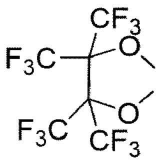

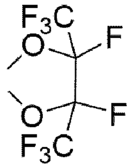

Der Chelatligand koordiniert an das Zentralatom Z unter Bildung eines Chelatkomplexes.

Im Fall des zweizähnigen Chelatliganden -O-$R^5$-O- koordinieren die beiden Sauerstoffatome an das Zentralatom Z. Synthetisch können solche Chelatkomplexe wie in dem nachfolgend beschriebenen Beispiel 1 hergestellt werden. Die Bezeichnung "Chelatkomplex" steht für Komplexverbindungen, bei denen ein mehrzähniger Ligand (besitzt mehr als ein freies Elektronenpaar) mindestens zwei Koordinationsstellen (Bindungsstellen) des Zentralatoms einnimmt. Der Chelatligand kann auch mehrzähnig ausgebildet sein, wenn drei oder vier der Substituenten $R^1$, $R^2$, $R^3$ und $R^4$ jeweils untereinander verbrückt vorliegen.

Der erfindungsgemäße auf $SO_2$-basierende Elektrolyt enthält $SO_2$ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das $SO_2$ gewährleistet ist. Das erste Leitsalz ist in dem Elektrolyten gelöst und zeigt darin eine sehr gute Löslichkeit. Es kann mit dem gasförmigen $SO_2$ einen flüssigen Solvatkomplex bilden, in welchem das $SO_2$ gebunden wird. In diesem Fall sinkt der Dampfdruck des flüssigen Solvatkomplexes gegenüber dem reinen $SO_2$ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz nach Formel (I) hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze der Formel (I) enthalten, welche in ihrer chemischen Struktur voneinander abweichen.

Der Begriff "$C_1$-$C_{10}$ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "$C_2$-$C_{40}$ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen.

Der Begriff "$C_2$-$C_{40}$ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl, 1- Hexinyl, 1-Heptinyl, 1-Octinyl, 1-Noninyl, 1- Decinyl und dergleichen.

Der Begriff "$C_3$-$C_{40}$ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "$C_6$-$C_{14}$ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl ($C_6H_5$ Gruppe), Naphthyl ($C_{10}H_7$ Gruppe) und Anthracyl ($C_{14}H_9$ Gruppe).

Der Begriff "$C_{5-}C_{14}$ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen.

Ein derartiger Elektrolyt hat gegenüber den aus dem Stand der Technik bekannten Elektrolyten den Vorteil, dass das darin enthaltene erste Leitsalz eine höhere Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem Potential von 4,0 Volt, weiter bevorzugt mindestens bis zu einem Potential von 4,2 Volt, weiter bevorzugt mindestens bis zu

einem Potential von 4,4 Volt, weiter bevorzugt mindestens bis zu einem Potential von 4,6 Volt, weiter bevorzugt mindestens bis zu einem Potential von 4,8 Volt und besonders bevorzugt mindestens bis zu einem Potential von 5,0 Volt. Somit kommt es bei der Verwendung eines solchen Elektrolyten in einer wiederaufladbaren Batteriezelle zu einer nur geringen oder sogar gar keinen Elektrolytzersetzung innerhalb der Arbeitspotentiale beider Elektroden der wiederaufladbaren Batteriezelle. Hierdurch wird die Lebensdauer des Elektrolyten gegenüber den aus dem Stand der Technik bekannten Elektrolyten deutlich verlängert. Weiterhin ist ein solcher Elektrolyt auch tieftemperaturfest. Sofern sich in dem Elektrolyten noch geringe Restmengen an Wasser (im ppm-Bereich) befinden, so bildet der Elektrolyt bzw. das erste Leitsalz mit dem Wasser im Vergleich zu den aus dem Stand der Technik bekannten, auf $SO_2$-basierenden Elektrolyten Hydrolyseprodukte, welche deutlich weniger aggressiv gegenüber den Zellkomponenten sind. Aufgrund dessen spielt eine Wasserfreiheit des Elektrolyts im Vergleich zu den aus dem Stand der Technik bekannten, auf $SO_2$-basierenden Elektrolyten mit dem Leitsalz $LiAlCl_4$ eine weniger bedeutende Rolle. Diese Vorteile des erfindungsgemäßen Elektrolyten überwiegen den Nachteil, der dadurch entsteht, dass das erste Leitsalz nach Formel (I) eine im Vergleich zu den aus dem Stand der Technik bekannten Leitsalze deutlich höhere Anionengröße aufweist. Diese höhere Anionengröße führt zu einer im Vergleich zur Leitfähigkeit von $LiAlCl_4$ geringeren Leitfähigkeit des ersten Leitsalzes gemäß Formel (I).

Ein weiterer Aspekt der Erfindung sieht eine wiederaufladbare Batteriezelle vor. Diese wiederaufladbare Batteriezelle enthält den zuvor beschriebenen, erfindungsgemäßen Elektrolyten oder einen Elektrolyten gemäß einer der nachfolgend beschriebenen, vorteilhaften Ausgestaltungen des erfindungsgemäßen Elektrolyten. Weiterhin umfasst die erfindungsgemäße wiederaufladbare Batteriezelle ein aktives Metall, zumindest eine positive Elektrode, zumindest eine negative Elektrode und ein Gehäuse.

Elektrolyt

Nachfolgend sind vorteilhafte Ausgestaltungen des erfindungsgemäßen Elektrolyten beschrieben:
In einer ersten vorteilhaften Ausgestaltung des erfindungsgemäßen Elektrolyten ist der Substituent $R^5$ ausgewählt aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

Der Begriff "$C_1$-$C_6$ Alkyl" umfasst im Fall dieser vorteilhaften Ausgestaltung des erfindungsgemäßen Elektrolyten lineare oder verzweigte gesättigte Kohlenwasserstoffgruppen mit einem bis sechs Kohlenwasserstoffgruppen, insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl und iso-Hexyl. Hierunter sind $C_2$-$C_4$ Alkyle bevorzugt. Besonders bevorzugt sind die $C_2$-$C_4$ Alkyle 2-Propyl, Methyl und Ethyl.

Der Begriff "$C_2$-$C_6$ Alkenyl" umfasst im Fall dieser vorteilhaften Ausgestaltung des erfindungsgemäßen Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl und 1-Hexenyl, wobei $C_2$-$C_4$ Alkenyle bevorzugt sind. Besonders bevorzugt sind Ethenyl und 1-Propenyl.

Der Begriff "$C_2$-$C_6$-Alkinyl" umfasst im Fall dieser vorteilhaften Ausgestaltung des erfindungsgemäßen Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl und 1- Hexinyl. Bevorzugt hierunter sind $C_2$-$C_4$-Alkinyle.

Der Begriff "$C_3$-$C_6$ Cycloalkyl" umfasst im Fall dieser vorteilhaften Ausgestaltung des erfindungsgemäßen Elektrolyten zyklische gesättigte Kohlenwasserstoffgruppen mit drei bis sechs Kohlenstoffatomen. Hierunter fallen insbesondere Cyclopropyl, Cyclobutyl, Cyclopentyl und Cyclohexyl.

Der Begriff "$C_5$-$C_7$ Heteroaryl" umfasst im Fall dieser vorteilhaften Ausgestaltung des erfindungsgemäßen Elektrolyten Phenyl und Naphtyl.

Zur Verbesserung der Löslichkeit des ersten Leitsalzes in dem auf $SO_2$-basierenden Elektrolyten ist zumindest ein einzelnes Atom oder eine Atomgruppe des Substituenten $R^5$ durch ein Halogenatom, insbesondere ein Fluoratom, oder durch eine chemische Gruppe substituiert, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl, Benzyl, und voll- und teilhalogeniertem, insbesondere voll- und teilfluoriertem, $C_1$-$C_4$-Alkyl, $C_2$-$C_4$-Alkenyl, $C_2$-$C_4$-Alkinyl, Phenyl und Benzyl. Die chemischen Gruppen $C_1$-$C_4$-Alkyl,

$C_2$-$C_4$-Alkenyl, $C_2$-$C_4$-Alkinyl, Phenyl und Benzyl weisen dieselben Eigenschaften bzw. chemischen Strukturen auf, wie die zuvor beschriebenen Kohlenwasserstoffgruppen.

Sofern einer bis drei der Substituenten $R^1$, $R^2$, $R^3$ und $R^4$ Hydroxygruppen (-OH) sind, dann kann auch das Wasserstoffatom (H) von einer bis drei dieser Hydroxygruppen durch die chemische Gruppe substituiert sein, die ausgewählt ist aus der Gruppe, die gebildet wird von $C_1$-$C_4$-Alkyl, $C_2$-$C_4$-Alkenyl, $C_2$-$C_4$-Alkinyl, Phenyl, Benzyl, und voll- und teilhalogeniertem, insbesondere voll- und teilfluoriertem, $C_1$-$C_4$-Alkyl, $C_2$-$C_4$-Alkenyl, $C_2$-$C_4$-Alkinyl, Phenyl und Benzyl. Die chemischen Gruppen $C_1$-$C_4$-Alkyl, $C_2$-$C_4$-Alkenyl, $C_2$-$C_4$-Alkinyl, Phenyl und Benzyl weisen dieselben Eigenschaften bzw. chemischen Strukturen auf, wie die zuvor beschriebenen Kohlenwasserstoffgruppen.

Eine besonders hohe Löslichkeit des ersten Leitsalzes in dem auf $SO_2$-basierenden Elektrolyten kann dadurch erreicht werden, dass zumindest eine Atomgruppe des Substituenten $R^5$ vorzugsweise eine $CF_3$-Gruppe oder eine $OSO_2CF_3$-Gruppe ist.

In einer weiteren vorteilhaften Ausgestaltung des erfindungsgemäßen Elektrolyten ist das erste Leitsalz ausgewählt aus der Gruppe, die gebildet wird von

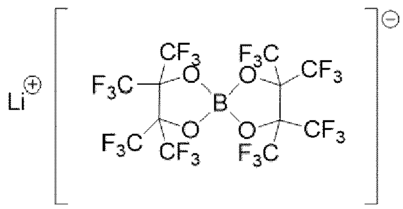

$LiB[O_2C_2(CF_3)_4]_2$

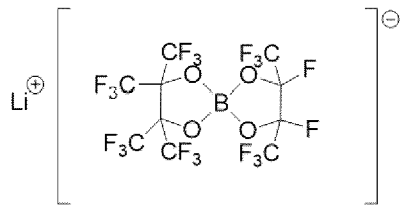

$LiB[(O_2C_2(CF_3)_4)(OCF(CF_3))_2]$

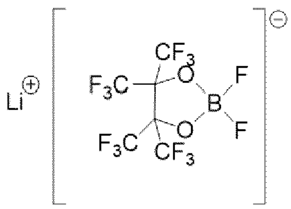

$LiBF_2(O_2C_2(CF_3)_4)$

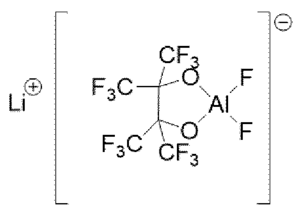

$LiAlF_2(O_2C_2(CF_3)_4)$

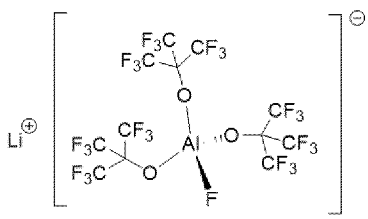

$LiAlF(OC(CF_3)_3)_3$

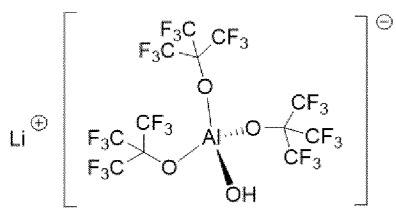

$Li[Al(OH)(OC(CF_3)_3)_3]$

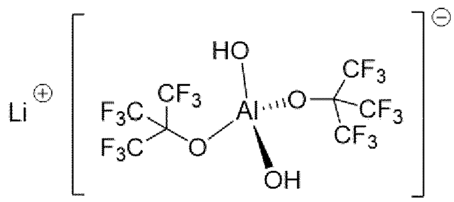

$Li[Al(OH)_2(OC(CF_3)_3)_2]$

Um die Leitfähigkeit und/oder weitere Eigenschaften des Elektrolyten an einen gewünschten Wert anzupassen, weist der Elektrolyt in einer weiteren vorteilhaften Ausgestaltung zumindest ein zweites, von dem ersten Leitsalz nach Formel (I) abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

In einer vorteilhaften Ausgestaltung des erfindungsgemäßen Elektrolyten weist das zweite Leitsalz die Formel (II)

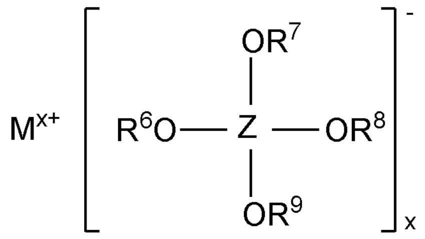

Formel (II)

auf. In Formel (II) ist M ein Metall, das ausgewählt ist aus der Gruppe, die gebildet wird von Alkalimetallen, Erdalkalimetallen, Metallen der Gruppe 12 des Periodensystems der Elemente und Aluminium. x ist eine ganze Zahl von 1 bis 3. Die Substituenten $R^6$, $R^7$, $R^8$ und $R^9$ sind unabhängig voneinander ausgewählt aus der Gruppe, die gebildet wird von $C_1$-$C_{10}$ Alkyl, $C_2$-$C_{10}$ Alkenyl, $C_2$-$C_{10}$ Alkinyl, $C_3$-$C_{40}$ Cycloalkyl, $C_6$-$C_{14}$ Aryl und $C_5$-$C_{14}$ Heteroaryl. Das Zentralatom Z ist entweder Aluminium oder Bor. Zur Verbesserung der Löslichkeit des zweiten Leitsalzes nach Formel (II) in dem auf $SO_2$-basierenden Elektrolyten sind die Substituenten $R^6$, $R^7$, $R^8$ und $R^9$ in einer weiteren vorteilhaften Ausgestaltung der wiederaufladbaren Batteriezelle durch mindestens ein Halogenatom und/oder durch mindestens eine chemische Gruppe substituiert, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl. Substituiert bedeutet in diesem Zusammenhang, dass einzelne Atome oder Atomgruppen der Substituenten $R^6$, $R^7$, $R^8$ und $R^9$ durch das Halogenatom und/oder durch die chemische Gruppe ersetzt sind. Die chemischen Gruppen $C_1$-$C_{10}$ Alkyl, $C_2$-$C_{10}$ Alkenyl, $C_2$-$C_{10}$ Alkinyl, $C_3$-$C_{40}$ Cycloalkyl, $C_6$-$C_{14}$ Aryl und $C_5$-$C_{14}$ Heteroaryl weisen dieselben Eigenschaften bzw. chemischen Strukturen auf, wie die zu dem ersten Leitsalz mit der Formel (I) beschriebenen Kohlenwasserstoffgruppen. Eine besonders hohe Löslichkeit des zweiten Leitsalzes nach Formel (II) in dem auf $SO_2$-basierenden Elektrolyten kann dadurch erreicht werden, dass zumindest einer der Substituenten $R^6$, $R^7$, $R^8$ und $R^9$ eine $CF_3$-Gruppe oder eine $OSO_2CF_3$-Gruppe ist.

In einer weiteren vorteilhaften Ausgestaltung des erfindungsgemäßen Elektrolyten ist das zweite Leitsalz eine Alkalimetallverbindung, insbesondere eine Lithiumverbindung. Die Alkalimetallverbindung oder die Lithiumverbindung sind ausgewählt aus der Gruppe, die gebildet wird von einem Aluminat, einem Halogenid, einem Oxalat, einem Borat, einem Phosphat, einem Arsenat und einem Gallat. Vorzugsweise ist das zweite Leitsalz ein Lithiumtetrahalogenoaluminat, insbesondere $LiAlCl_4$.

Des Weiteren enthält der Elektrolyt in einer weiteren vorteilhaften Ausgestaltung zumindest ein Additiv. Dieses Additiv ist vorzugsweise ausgewählt aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithium-difluor(oxalato)borat, Lithiumtetrafluor(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 °C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

Bezogen auf das Gesamtgewicht der Elektrolytzusammensetzung weist der Elektrolyt in einer weiteren vorteilhaften Ausgestaltung folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs.

Wie bereits zuvor erwähnt, kann der Elektrolyt nicht nur ein erstes Leitsalz nach Formel (I) und ein zweites Leitsalz enthalten, sondern jeweils auch mehrere erste Leitsalze nach Formel (I) und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,05 mol/l bis 10 mol/l, bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Ausgestaltung der erfindungsgemäßen wiederaufladbaren Batteriezelle sieht vor, dass der Elektrolyt mindestens 0,1 Mol $SO_2$, bevorzugt mindestens 1 Mol $SO_2$, weiter bevorzugt mindestens 5 Mol $SO_2$, weiter

bevorzugt mindestens 10 Mol $SO_2$ und besonders bevorzugt mindestens 20 Mol $SO_2$ je Mol Leitsalz enthält. Der Elektrolyt kann auch sehr hohe molare Anteile an $SO_2$ enthalten, wobei der bevorzugte obere Grenzwert mit 2600 Mol $SO_2$ je Mol Leitsalz angegeben werden kann und Obergrenzen von 1500, 1000, 500 und 100 Mol $SO_2$ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf $SO_2$-basierende Elektrolyte mit einem derartigen Konzentrationsverhältnis zwischen $SO_2$ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an $SO_2$ im Elektrolyten wirkt sich auf dessen Leitfähigkeit aus. Somit kann durch die Wahl der $SO_2$-Konzentration die Leitfähigkeit des Elektrolyten an die geplante Verwendung einer mit diesem Elektrolyten betriebenen wiederaufladbaren Batteriezelle angepasst werden.

Der Gesamtgehalt von $SO_2$ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% $SO_2$ bezogen auf die Gesamtmenge des in der wiederaufladbaren Batteriezelle enthaltenen Elektrolyten enthalten, wobei Werte von 20 Gew% $SO_2$, 40 Gew% $SO_2$ und 60 Gew% $SO_2$ weiter bevorzugt sind. Der Elektrolyt kann auch bis zu 95 Gew% $SO_2$ enthalten, wobei Maximalwerte von 80 Gew% $SO_2$ und 90 Gew% $SO_2$ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittel vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf $SO_2$-basierenden Elektrolyten betriebenen wiederaufladbaren Batteriezelle. Besonders bevorzugt ist der auf $SO_2$-basierende Elektrolyt im Wesentlichen frei von organischen Lösungsmitteln.

Aktives Metall

Nachfolgend sind vorteilhafte Weiterbildungen der erfindungsgemäßen wiederaufladbaren Batteriezelle im Hinblick auf das aktive Metall beschrieben:
In einer ersten vorteilhaften Weiterbildung der wiederaufladbare Batteriezelle ist das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium.

Negative Elektrode

Nachfolgend sind vorteilhafte Weiterbildungen der erfindungsgemäßen wiederaufladbaren Batteriezelle im Hinblick auf die negative Elektrode beschrieben:
Eine weitere vorteilhafte Weiterbildung der wiederaufladbaren Batteriezelle sieht vor, dass die negative Elektrode eine Insertionselektrode ist. Diese Insertionselektrode enthält ein Insertionsmaterial als aktives Material, in welches die Ionen des aktiven Metalls während des Ladens der wiederaufladbare Batteriezelle eingelagert und aus welchem die Ionen des aktiven Metalls während des Entladens der wiederaufladbaren Batteriezelle ausgelagert werden können. Das bedeutet, dass sich die Elektrodenprozesse nicht nur an der Oberfläche der negativen Elektrode, sondern auch im Inneren der negativen Elektrode abspielen können. Wird beispielsweise ein Leitsalz auf Lithium-Basis verwendet, so können Lithiumionen während des Ladens der wiederaufladbaren Batteriezelle in das Insertionsmaterial eingelagert und während des Entladens der wiederaufladbare Batteriezelle aus diesem ausgelagert werden. Vorzugsweise enthält die negative Elektrode als aktives Material bzw. Insertionsmaterial Kohlenstoff, insbesondere in der Modifikation Graphit. Es liegt jedoch auch im Rahmen der Erfindung, dass der Kohlenstoff in Form von Naturgraphit (Flocken-Fördermittel oder gerundet), synthetischem Graphit (Mesophasen Graphit), graphitiertem MesoCarbon MicroBeads (MCMB), mit kohlenstoffbeschichtetem Graphit oder amorphem Kohlenstoff vorliegt.

Die negative Elektrode umfasst in einer weiteren vorteilhaften Weiterbildung der erfindungsgemäßen wiederaufladbaren Batteriezelle Lithium-Interkalations-Anodenaktivmaterialien, die keinen Kohlenstoff enthalten, so zum Beispiel Lithium-Titanate (z.B. $Li_4Ti_5O_{12}$).

Eine weitere vorteilhafte Weiterbildung der erfindungsgemäßen wiederaufladbaren Batteriezelle sieht vor, dass die negative Elektrode mit Lithium Legierungsbildende-Anodenaktivmaterialien umfasst. Das sind zum Beispiel Lithiumspeichernde Metalle und Metalllegierungen (z.B. Si, Ge, Sn, $SnCo_xC_y$, $SnSi_x$ und dergleichen) und Oxide der Lithiumspeichernden Metalle und Metalllegierungen (z.B. $SnO_x$, $SiO_x$, oxidische Gläser von Sn, Si und dergleichen).

Die negative Elektrode enthält in einer weiteren vorteilhaften Weiterbildung der erfindungsgemäßen wiederaufladbaren Batteriezelle Konversions-Anodenaktivmaterialien. Diese Konversions-Anodenaktivmaterialien können beispielsweise Übergangsmetalloxide in Form von Manganoxiden ($MnO_x$), Eisenoxiden ($FeO_x$), Cobaltoxiden ($CoO_x$), Nickeloxiden ($NiO_x$), Kupferoxiden ($CuO_x$) oder Metallhydride in Form von Magnesiumhydrid ($MgH_2$), Titanhydrid ($TiH_2$), Aluminiumhydrid ($AlH_3$) und Bor-, Aluminium- und Magnesiumbasierte ternäre Hydride und dergleichen sein.

In einer weiteren vorteilhaften Weiterbildung der erfindungsgemäßen wiederaufladbaren Batteriezelle umfasst die negative Elektrode ein Metall, insbesondere metallisches Lithium.

Eine weitere vorteilhafte Weiterbildung der erfindungsgemäßen wiederaufladbaren Batteriezelle sieht vor, dass die negative Elektrode porös ist, wobei die Porosität bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt. Die Porosität stellt das Hohlraumvolumen zu Gesamtvolumen der negativen Elektrode dar, wobei das Hohlraumvolumen von sogenannten Poren bzw. Hohlräumen ausgebildet wird. Diese Porosität führt zu einer Vergrößerung der inneren Oberfläche der negativen Elektrode. Weiterhin verringert die Porosität die Dichte der negativen Elektrode und damit auch ihr Gewicht. Die einzelnen Poren der negativen Elektrode können im Betrieb vorzugsweise vollständig mit dem Elektrolyten gefüllt sein.

Eine weitere vorteilhafte Weiterbildung der erfindungsgemäßen Batteriezelle sieht vor, dass die negative Elektrode ein Ableitelement aufweist. Das bedeutet, dass die negative Elektrode neben dem aktiven Material bzw. Insertionsmaterial auch ein Ableitelement umfasst. Dieses Ableitelement dient dazu, den erforderlichen elektronisch leitenden Anschluss des aktiven Materials der negativen Elektrode zu ermöglichen. Hierfür steht das Ableitelement in Kontakt mit dem an der Elektrodenreaktion der negativen Elektrode beteiligten aktiven Material. Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das aktive Material der negativen Elektrode ist vorzugsweise auf die Oberfläche des dünnen Metallblechs oder der dünnen Metallfolie aufgebracht. Derartige planare Ableitelemente weisen eine Dicke im Bereich von 5 µm bis 50 µm auf. Eine Dicke des planaren Ableitelements im Bereich von 10 µm bis 30 µm ist bevorzugt. Bei der Verwendung von planaren Ableitelementen kann die negative Elektrode eine Gesamtdicke von mindestens 20 µm, bevorzugt mindestens 40 µm und besonders bevorzugt mindestens 60 µm aufweisen. Die maximalen Dicke beträgt höchstens 200 µm, bevorzugt höchstens 150 µm und besonders bevorzugt höchstens 100 µm. Die flächenspezifische Kapazität der negativen Elektrode weist bei der Verwendung eines planaren Ableitelements vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$.

Weiterhin besteht auch die Möglichkeit, dass das Ableitelement dreidimensional in Form einer porösen Metallstruktur, insbesondere in Form eines Metallschaums ausgebildet sein kann. Der Begriff "dreidimensionale poröse Metallstruktur" bezeichnet dabei jede aus Metall bestehende Struktur, die sich nicht nur wie das dünne Metallblech bzw. die Metallfolie über Länge und Breite der flächigen Elektrode erstreckt, sondern auch über deren Dickendimension. Die dreidimensionale poröse Metallstruktur ist derartig porös, dass das aktive Material der negativen Elektrode in die Poren der Metallstruktur eingearbeitet werden kann. Bei der Menge an eingearbeitetem bzw. aufgebrachten aktivem Material handelt es sich um die Beladung der negativen Elektrode. Wenn das Ableitelement dreidimensional in Form einer porösen Metallstruktur, insbesondere in Form eines Metallschaums ausgebildet ist, dann weist die negative Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Die Dicke der Elektroden ist in diesem Fall deutlich größer im Vergleich zu negativen Elektroden, welche bei organischen Lithium-Ionen-Zellen Anwendung finden. Eine weitere vorteilhafte Ausgestaltung sieht vor, dass die flächenspezifische Kapazität der negativen Elektrode bei der Verwendung eines dreidimensionalen Ableitelements in Form eines Metallschaums, insbesondere in Form eines Metallschaums vorzugsweise mindestens 2,5 $mAh/cm^2$ beträgt, wobei folgende Werte in dieser Reihenfolge weiter bevorzugt sind: 5 $mAh/cm^2$, 10 $mAh/cm^2$, 15 $mAh/cm^2$, 20 $mAh/cm^2$, 25 $mAh/cm^2$, 30 $mAh/cm^2$. Wenn das Ableitelement dreidimensional in Form einer porösen Metallstruktur, insbesondere in Form eines Metallschaums ausgebildet ist, beträgt die Menge des aktiven Materials der negativen Elektrode, d.h. die Beladung der Elektrode, bezogen auf ihre Fläche, mindestens 10 $mg/cm^2$, bevorzugt mindestens 20 $mg/cm^2$, weiter bevorzugt mindestens 40 $mg/cm^2$, weiter bevorzugt mindestens 60 $mg/cm^2$, weiter bevorzugt mindestens 80 $mg/cm^2$ und besonders bevorzugt mindestens 100 $mg/cm^2$. Diese Beladung der negativen Elektrode wirkt sich positiv auf den Ladevorgang sowie den Entladevorgang

der wiederaufladbaren Batteriezelle aus.

Die negative Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der negativen Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der negativen Elektrode vor.

Positive Elektrode

Nachfolgend sind vorteilhafte Weiterbildungen der erfindungsgemäßen wiederaufladbaren Batteriezelle im Hinblick auf die positive Elektrode beschrieben:
Die positive Elektrode enthält in einer weiteren vorteilhaften Weiterbildung der erfindungsgemäßen Batteriezelle als aktives Material zumindest eine Interkalationsverbindung. Unter dem Begriff "Interkalationsverbindung" ist im Sinne der vorliegenden Erfindung eine Unterkategorie der zuvor beschriebenen Insertionsmaterialien zu verstehen. Diese Interkalationsverbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen. Vorzugsweise weist die Interkalationsverbindung die Zusammensetzung $Li_xM'_yM''_zO_a$ auf, worin

- M' mindestens ein Metall ist, das ausgewählt ist aus der Gruppe, die gebildet wird von den Elementen Ti, V, Cr, Mn, Fe, Co, Ni, Cu und Zn;
- M" mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander größer 0 sind;
- z größer oder gleich 0 ist; und
- a ist größer 0.

Die Indizes y und z beziehen sich dabei auf die Gesamtheit der Metalle und Elemente, die durch M' bzw. M" repräsentiert werden. Umfasst zum Beispiel M' zwei Metalle $M'_1$ und $M'_2$, so gilt für den Index y: y=y1+y2, wobei y1 und y2 die Indizes der Metalle $M'_1$ und $M'_2$ darstellen. Die Indizes x, y, z und a müssen so gewählt werden, dass eine Ladungsneutralität innerhalb der Zusammensetzung herrscht.

Bevorzugt sind Zusammensetzungen der Formel $Li_xM'_yM''_zO_4$. In einer weiteren vorteilhaften Weiterbildung der erfindungsgemäßen wiederaufladbaren Batteriezelle sind M' Eisen und M" Phosphor in der Zusammensetzung $Li_xM'_yM''_zO_4$. In diesem Fall handelt es sich bei der Interkalationsverbindung um Lithiumeisenphosphat ($LiFePO_4$). Eine andere vorteilhafte Weiterbildung der erfindungsgemäßen wiederaufladbaren Batteriezelle sieht vor, dass M' Mangan und M" Cobalt in der Zusammensetzung $Li_xM'_yM''_zO_4$ sind. In diesem Fall handelt es sich bei der Interkalationsverbindung um Lithiumcobaltmanganoxid (Li-$CoMnO_4$). Mit $LiCoMnO_4$ lassen sich sogenannte Hochvoltelektroden für Hochenergiezellen mit einer Zellspannung von über 5 Volt herstellen. Dieses $LiCoMnO_4$ ist vorzugsweise $Mn^{3+}$ frei.

Eine andere vorteilhafte Weiterbildung der erfindungsgemäßen wiederaufladbaren Batteriezelle sieht vor, dass M' aus den Metallen Nickel und Mangan besteht und M" Cobalt ist. Es handelt sich dabei um Zusammensetzungen der Formel $Li_xNi_{y1}Mn_{y2}Co_zO_2$ (NMC). Beispiele für diese Interkalationsverbindungen aus Lithiumnickelmangancobaltoxid sind $LiNi_{1/3}Mn_{1/3}CO_{1/3}O_2$ (NMC111), $LiNi_{0.6}Mn_{0.2}Co_2O_2$ (NMC622) und $LiNi_{0.8}Mn_{0.1}Co_{0.1}O_2$ (NMC811).

Hochvoltelektroden können mindestens bis zu einem oberen Potential von 4,0 Volt, weiter bevorzugt mindestens bis zu einem Potential von 4,2 Volt, weiter bevorzugt mindestens bis zu einem Potential von 4,4 Volt, weiter bevorzugt mindestens bis zu einem Potential von 4,6 Volt, weiter bevorzugt mindestens bis zu einem Potential von 4,8 Volt und besonders bevorzugt mindestens bis zu einem Potential von 5,0 Volt in der erfindungsgemäßen wiederaufladbaren Batteriezelle gezykelt werden.

Eine weitere vorteilhafte Weiterbildung der erfindungsgemäßen wiederaufladbaren Batteriezelle sieht vor, dass die positive Elektrode zumindest eine Metallverbindung enthält. Diese Metallverbindung ist ausgewählt aus der Gruppe, die gebildet wird von einem Metalloxid, einem Metallhalogenid und einem Metallphosphat. Vorzugsweise ist das Metall dieser Metallverbindung ein Übergangsmetall der Ordnungszahlen 22 bis 28 des Periodensystems der Elemente,

insbesondere Kobalt, Nickel, Mangan oder Eisen.

Eine weitere vorteilhafte Weiterbildung der erfindungsgemäßen Batteriezelle sieht vor, dass die positive Elektrode ein Ableitelement aufweist. Das bedeutet, dass die positive Elektrode neben dem aktiven Material auch ein Ableitelement umfasst. Dieses Ableitelement dient dazu, den erforderlichen elektronisch leitenden Anschluss des aktiven Materials der positiven Elektrode zu ermöglichen. Hierfür steht das Ableitelement in Kontakt mit dem an der Elektrodenreaktion der positiven Elektrode beteiligten aktiven Material.

Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das aktive Material der positiven Elektrode ist vorzugsweise auf die Oberfläche des dünnen Metallblechs oder der dünnen Metallfolie aufgebracht. Derartige planare Ableitelemente weisen eine Dicke im Bereich von 5 µm bis 50 µm auf. Eine Dicke des planaren Ableitelements im Bereich von 10 µm bis 30 µm ist bevorzugt. Bei der Verwendung von planaren Ableitelementen kann die positive Elektrode eine Gesamtdicke von mindestens 20 µm, bevorzugt mindestens 40 µm und besonders bevorzugt mindestens 60 µm aufweise. Die maximalen Dicke beträgt höchstens 200 µm, bevorzugt höchstens 150 µm und besonders bevorzugt höchstens 100 µm. Die flächenspezifische Kapazität der positiven Elektrode weist bei der Verwendung eines planaren Ableitelements vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$.

Weiterhin besteht auch die Möglichkeit, dass das Ableitelement der positiven Elektrode dreidimensional in Form einer porösen Metallstruktur, insbesondere in Form eines Metallschaums ausgebildet ist. Die dreidimensionale poröse Metallstruktur ist derartig porös, dass das aktive Material der positiven Elektrode in die Poren der Metallstruktur eingearbeitet werden kann. Bei der Menge an eingearbeitetem bzw. aufgebrachten aktivem Material handelt es sich um die Beladung der positiven Elektrode. Wenn das Ableitelement dreidimensional in Form einer porösen Metallstruktur, insbesondere in Form eines Metallschaums ausgebildet ist, dann weist die positive Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Eine weitere vorteilhafte Ausgestaltung sieht vor, dass die flächenspezifische Kapazität der positiven Elektrode bei der Verwendung eines dreidimensionalen Ableitelements in Form eines Metallschaums, insbesondere in Form eines Metallschaums vorzugsweise mindestens 2,5 $mAh/cm^2$ beträgt, wobei folgende Werte in dieser Reihenfolge weiter bevorzugt sind: 5 $mAh/cm^2$, 10 $mAh/cm^2$, 15 $mAh/cm^2$, 20 $mAh/cm^2$, 25 $mAh/cm^2$, 30 $mAh/cm^2$. Wenn das Ableitelement dreidimensional in Form einer porösen Metallstruktur, insbesondere in Form eines Metallschaums ausgebildet ist, beträgt die Menge des aktiven Materials der positiven Elektrode, d.h. die Beladung der Elektrode, bezogen auf ihre Fläche, mindestens 10 $mg/cm^2$, bevorzugt mindestens 20 $mg/cm^2$, weiter bevorzugt mindestens 40 $mg/cm^2$, weiter bevorzugt mindestens 60 $mg/cm^2$, weiter bevorzugt mindestens 80 $mg/cm^2$ und besonders bevorzugt mindestens 100 $mg/cm^2$. Diese Beladung der positiven Elektrode wirkt sich positiv auf den Ladevorgang sowie den Entladevorgang der wiederaufladbaren Batteriezelle aus.

Die positive Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der positiven Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vor.

Aufbau der wiederaufladbaren Batteriezelle

Nachfolgend sind vorteilhafte Weiterbildungen der erfindungsgemäßen wiederaufladbaren Batteriezelle im Hinblick auf deren Aufbau beschrieben:
Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative Elektroden und mehrere positive Elektroden umfasst, die alternierend gestapelt in dem Gehäuse angeordnet sind. Hierbei sind die positiven Elektroden und die negativen Elektroden vorzugsweise jeweils durch Separatoren voneinander elektrisch getrennt.

Die wiederaufladbare Batteriezelle kann jedoch auch als Wickelzelle ausgebildet sein, bei welcher die Elektroden aus dünnen Lagen bestehen, die zusammen mit einem Separatormaterial aufgewickelt sind. Die Separatoren trennen einerseits die positive Elektrode und die negative Elektrode räumlich und elektrisch und sind andererseits unter anderem für die Ionen des aktiven Metalls durchlässig. Auf diese Weise entstehen große elektrochemisch wirksame

Oberflächen, die eine entsprechend hohe Stromausbeute ermöglichen. Der Separator kann aus einem Vlies, einer Membran, einem Gewebe, einem Gewirke, einem organischen Material, einem anorganischen Material oder aus einer Kombination hiervon ausgebildet sein. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert, insbesondere PVDF, ETFE, PTFE), Polyestern, Polyamiden oder Polysulfonen bestehen. Separatoren, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE). Der Separator kann im Gehäuse der wiederaufladbaren Batteriezelle auch gefaltet vorliegen, beispielsweise in Form eines sogenannten "Z-Foldings". Bei diesem Z-Folding ist ein streifenförmiger Separator durch bzw. um die Elektroden z-artig gefaltet. Weiterhin kann der Separator auch als Separatorpapier ausgebildet sein.

Es liegt auch im Rahmen der Erfindung, dass der Separator als Umhüllung ausgebildet sein kann, wobei jede positive Elektrode oder jede negative Elektrode von der Umhüllung umhüllt ist. Die Umhüllung kann aus einem Vlies, einer Membran, einem Gewebe, einem Gewirke, einem organischen Material, einem anorganischen Material oder aus einer Kombination hiervon ausgebildet sein.

Eine Umhüllung der positiven Elektrode führt zu einer gleichmäßigeren Ionenwanderung und Ionenverteilung in der wiederaufladbaren Batteriezelle. Je gleichmäßiger die Ionenverteilung, insbesondere in der negativen Elektrode ist, desto höher kann die mögliche Beladung der negativen Elektrode mit aktivem Material und infolgedessen die nutzbare Kapazität der wiederaufladbaren Batteriezelle sein. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der wiederaufladbaren Batteriezelle mit der Umhüllung umhüllt sind.

Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.

Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig bedeckende Schichten der Umhüllung können daher am Rand der positiven Elektrode durch eine Randverbindung miteinander verbunden werden.

In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben.

Weitere vorteilhafte Eigenschaften der Erfindung werden nachfolgend anhand von Figuren, Beispielen und Experimenten näher beschrieben und erläutert.

Figur 1: zeigt ein erstes Ausführungsbeispiel einer erfindungsgemäßen wiederaufladbaren Batteriezelle in einer Querschnittsdarstellung;

Figur 2: zeigt eine elektronenmikroskopische Aufnahme der dreidimensionalen porösen Struktur des Metallschaums des ersten Ausführungsbeispiels aus Figur 1 als Detaildarstellung;

Figur 3: zeigt ein zweites Ausführungsbeispiel einer erfindungsgemäßen wiederaufladbaren Batteriezelle in einer Querschnittsdarstellung;

Figur 4: zeigt ein Detail des zweiten Ausführungsbeispiels aus Figur 3;

Figur 5: zeigt ein drittes Ausführungsbeispiel der erfindungsgemäßen wiederaufladbaren Batteriezelle in einer Explosionsdarstellung;

Figur 6: zeigt einen Lade- und Entlade-Potentialverlauf in Volt [V] als Funktion der prozentualen Ladung einer Halbzelle, die mit dem Elektrolyten X1 befüllt ist;

Figur 7: zeigt einen Lade- und Entlade-Potentialverlauf in Volt [V] als Funktion der prozentualen Ladung von Test-Vollzellen, die mit dem Elektrolyten X1 befüllt sind;

Figur 8: zeigt das Potential in [V] von zwei Test-Vollzellen, die mit den Elektrolyten 9%/ 91% und dem Referenzelektrolyten befüllt sind, beim Laden als Funktion der Kapazität, die bezogen ist auf die theoretische Kapazität der negativen Elektrode, während einer Deckschichtbildung auf der negativen Elektrode;

Figur 9: zeigt die Entladekapazitäten von zwei Test-Vollzellen, die mit dem Elektrolyten 9%/ 91% und dem Referenzelektrolyten befüllt sind, als Funktion der Zykelzahl;

Figur 10: zeigt das Potential in [V] von zwei Test-Vollzellen, die mit den Elektrolyten 30%/ 70% und dem Referenzelektrolyten befüllt sind, beim Laden als Funktion der Kapazität, die bezogen ist auf die theoretische Kapazität der negativen Elektrode, während einer Deckschichtbildung auf der negativen Elektrode;

Figur 11: zeigt die Entladekapazitäten von zwei Test-Vollzellen, die mit den Elektrolyten 30%/ 70% und dem Referenzelektrolyten befüllt sind, als Funktion der Zykelzahl; und

Figur 12: zeigt die Leitfähigkeit in [mS/cm] des erfindungsgemäßen Elektrolyten X1 in Abhängigkeit der Konzentration.

Figur 1 zeigt ein erstes Ausführungsbeispiel einer erfindungsgemäßen wiederaufladbaren Batteriezelle 2 in Querschnittsdarstellung. Diese wiederaufladbare Batteriezelle 2 ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Das Gehäuse 1 kann jedoch auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der wiederaufladbaren Batteriezelle 2 verbunden. Die wiederaufladbare Batteriezelle 2 ist derart mit einem auf $SO_2$-basierenden Elektrolyten gefüllt, dass der Elektrolyt möglichst vollständig in sämtliche Poren bzw. Hohlräume, insbesondere innerhalb der Elektroden 4, 5, eindringt. Der Elektrolyt ist in Figur 1 nicht sichtbar. Im vorliegenden Ausführungsbeispiel enthalten die positiven Elektroden 4 eine Interkalationsverbindung als aktives Material. Bei dieser Interkalationsverbindung handelt es sich um $LiCoMnO_4$.

Die Elektroden 4, 5 sind im vorliegenden Ausführungsbeispiel flächig ausgebildet, d.h. als Schichten mit einem im Verhältnis zu ihrer Flächenausdehnung geringeren Dicke. Sie sind jeweils durch Separatoren 11 voneinander getrennt. Das Gehäuse 1 der wiederaufladbaren Batteriezelle 2 ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind. Die wiederaufladbare Batteriezelle 2 kann jedoch auch als Wickelzelle ausgebildet sein, bei welcher die Elektroden aus dünnen Lagen bestehen, die zusammen mit einem Separatormaterial aufgewickelt sind. Die Separatoren 11 trennen einerseits die positive Elektrode 4 und die negative Elektrode 5 räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen.

Die Elektroden 4, 5 weisen weiterhin ein in Figur 1 nicht dargestelltes Ableitelement auf, welches dazu dient, den erforderlichen elektronisch leitenden Anschluss des aktiven Materials der jeweiligen Elektrode zu ermöglichen. Dieses Ableitelement steht in Kontakt zu dem an der Elektrodenreaktion der jeweiligen Elektrode 4, 5 beteiligten aktiven Material (in Figur 1 nicht dargestellt). Das Ableitelement ist in Form eines porösen Metallschaums ausgebildet. Der Metallschaum erstreckt sich über die Dickendimension der Elektroden 4, 5. Das aktive Material der positiven Elektroden 4 und der negativen Elektroden 5 ist in die Poren dieses Metallschaums eingearbeitet, sodass es dessen Poren über die gesamte Dicke der Metallstruktur gleichmäßig füllt. Zur Verbesserung der mechanischen Festigkeit enthalten die positiven Elektroden 4 ein Bindemittel. Bei diesem Bindemittel handelt es sich um ein Fluorpolymer. Die negativen Elektroden 5 enthalten als aktives Material Kohlenstoff in einer als Insertionsmaterial zur Aufnahme von Lithiumionen geeigneten Form. Die Struktur der negativen Elektrode 5 ist ähnlich wie bei der positiven Elektrode 4.

Figur 2 zeigt eine elektronenmikroskopische Aufnahme der dreidimensionalen porösen Struktur des Metallschaums 18 des ersten Ausführungsbeispiels aus Figur 1. Anhand des angegebenen Maßstabes ist zu erkennen, dass die Poren P im Mittel einen Durchmesser von mehr als 100 $\mu$m haben, also verhältnismäßig groß sind.

Figur 3 zeigt ein zweites Ausführungsbeispiel der erfindungsgemäßen wiederaufladbaren Batteriezelle 20 in Querschnittsdarstellung. Dieses zweite Ausführungsbeispiel unterscheidet sich von dem in Figur 1 gezeigten, ersten Ausführungsbeispiel dadurch, dass die Elektrodenanordnung eine positive Elektrode 23 und zwei negative Elektroden 22 umfasst. Die Elektroden 22, 23 sind jeweils durch Separatoren 21 voneinander getrennt und von einem Gehäuse 28 umgeben. Die positive Elektrode 23 weist ein Ableitelement 26 in Form einer planaren Metallfolie auf, auf welche das aktive Material 24 der positiven Elektrode 23 beidseitig aufgebracht ist. Die negativen Elektroden 22 umfassen ebenfalls ein Ableitelement 27 in Form einer planaren Metallfolie, auf welche das aktiven Material 25 der negativen Elektrode 22

beidseitig aufgebracht ist. Alternativ können die planaren Ableitelemente der Randelektroden, also der Elektroden, die den Elektrodenstapel abschließen, nur einseitig mit aktivem Material beschichtetet sein. Die nicht-beschichtete Seite zeigt zur Wand des Gehäuses 28. Die Elektroden 22, 23 sind über Elektrodenanschlüsse 29, 30 mit entsprechenden Anschlusskontakten 31, 32 der wiederaufladbaren Batteriezelle 20 verbunden.

Figur 4 zeigt die planare Metallfolie, welche jeweils als Ableitelement 26, 27 für die positive Elektroden 4 und die negativen Elektroden 5 im zweiten Ausführungsbeispiel aus Figur 3 dient. Diese Metallfolie weist eine durchbrochene bzw. netzartige Struktur mit einer Dicke von 20 $\mu$m auf.

Figur 5 zeigt ein drittes Ausführungsbeispiel der erfindungsgemäßen wiederaufladbaren Batteriezelle 40 in Explosionsdarstellung. Dieses dritte Ausführungsbeispiel unterscheidet sich von den beiden zuvor erläuterten Ausführungsbeispielen dadurch, dass die positive Elektrode 44 von einer Umhüllung 13 umhüllt ist, welche als Separator dient. Dabei ist eine Flächenausdehnung der Umhüllung 13 größer als eine Flächenausdehnung der positiven Elektrode 44, deren Begrenzung 14 in Figur 5 als gestrichelte Linie eingezeichnet ist. Zwei, die positive Elektrode 44 beidseitig bedeckende Schichten 15, 16 der Umhüllung 13 sind am umlaufenden Rand der positiven Elektrode 44 durch eine Randverbindung 17 miteinander verbunden. Die beiden negativen Elektroden 45 sind nicht umhüllt. Die Elektroden 44 und 45 können über die Elektrodenanschlüsse 46 und 47 kontaktiert werden.

Beispiel 1: Herstellung eines Referenzelektrolyten

Für die nachfolgend beschriebenen Experimente wurde ein auf $SO_2$-basierender Referenzelektrolyt hergestellt. Hierfür wurde zunächst eine unten dargestellte Verbindung 1 als Leitsalz nach Formel (II) gemäß einem in dem folgenden Dokument [V5] beschriebenen Herstellungsverfahren hergestellt:

[V5] "I. Krossing, Chem. Eur. J. 2001, 7, 490;

Diese Verbindung 1 stammt aus der Familie der Polyfluoroalkoxyaluminate und wurde gemäß folgender Reaktionsgleichung ausgehend von $LiAlH_4$ und dem entsprechenden Alkohol R-OH mit $R^1=R^2=R^3=R^4$ in Hexan hergestellt.

$$LiAlH_4 + 4\ HO\text{-}R \xrightarrow{\text{Hexan}} LiAl(OR)_4 + 4\ H_2$$

Hierdurch wurde die nachfolgend darstellte Verbindung 1 mit der folgenden Summen- bzw. Strukturformeln gebildet:

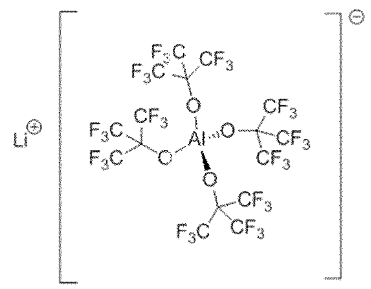

Li [Al(OC($CF_3$)$_3$)$_4$]

Verbindung 1

Zur Herstellung des Referenzelektrolyten wurde diese Verbindung 1 in $SO_2$ gelöst. Die Konzentration des Leitsalzes im Referenzelektrolyten betrug 0,6 mol/L.

Beispiel 2: Herstellung von Ausführungsbeispielen des erfindungsgemäßen Elektrolyten

Leitsalze nach Formel (I) mit Chelatliganden wurden ausgehend von den entsprechenden Diolen HO-R-OH gemäß einem im folgenden Dokument [V6] beschriebenen Herstellungsverfahren hergestellt:

[V6] Wu Xu et al., Electrochem. Solid-State Lett. 2000, 3, 366-368.

Folgende Reaktionsgleichung beschreibt z.B. die Herstellung der Verbindung X1:

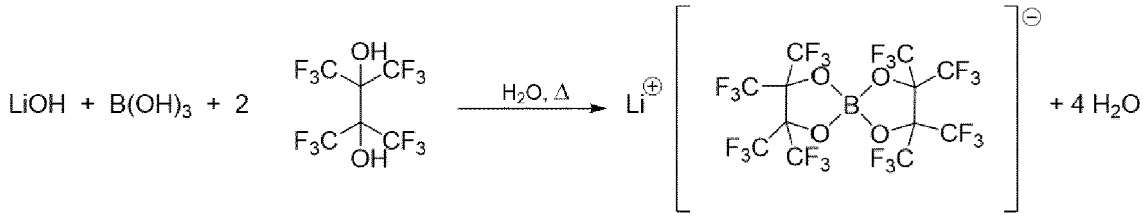


$LiB(O_2C_2(CF_3)_4)_2$

Verbindung X1

Zur Aufreinigung wurde die Verbindung X1 zunächst umkristallisiert. Hierdurch wurden Reste der Edukte aus dem Leitsalz entfernt.

Leitsalze nach Formel (I), bei denen an das Zentralatom drei Alkoxygruppen und eine Fluorid-Gruppe koordiniert sind, lassen sich gemäß einem im folgenden Dokument [V7] beschriebenen Herstellungsverfahren herstellen:

[V7] A. Martens et al., Chem. Sci., 2018, 9, 7058-7068

Folgende Verbindung X2 wurde in den Experimenten verwendet:

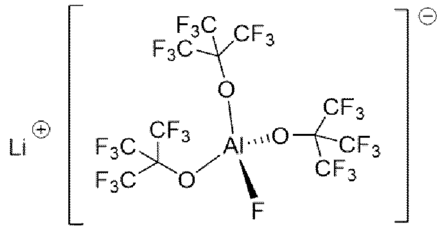

$LiAlF(OC(CF_3)_3)_3$

Verbindung X2

Leitsalze nach Formel (I), bei denen an das Zentralatom mindestens eine Alkoxygruppen und mindestens eine Hydroxy-Gruppe koordiniert sind, lassen sich durch die Behandlung von Tetraalkoxy-Verbindungen mit stöchiometrischen Mengen an Donorlösungsmitteln herstellen. So entstehen z.B. durch die Reaktion von $Li[Al(OC(CF_3)_3)_4]$ mit Wasser die folgenden Verbindungen X3 und X4:

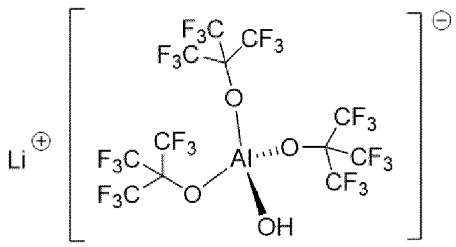

$Li[AlOH(OC(CF_3)_3)_3]$

Verbindung X3

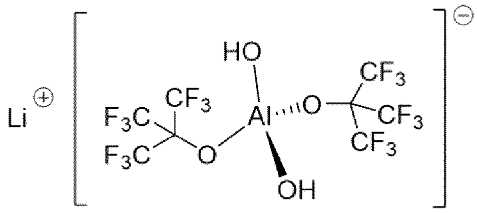

$Li[Al(OH)_2(OC(CF_3)_3)_2]$

Verbindung X4

Zur Herstellung der Elektrolyte X1, X2, X3 und X4 wurden die Verbindungen X1, X2, X3 und X4 in $SO_2$ gelöst. Diese Herstellung wurde bei Tieftemperatur oder unter Druck gemäß den nachfolgend aufgelisteten Verfahrensschritten 1 bis 4 durchgeführt:

1) Vorlage der Verbindungen X1, X2, X3 und X4 in jeweils einem Druckkolben mit Steigrohr,
2) Evakuieren der Druckkolben,
3) Einströmen von flüssigem $SO_2$ und
4) Wiederholung der Schritte 2 + 3 bis die Zielmenge an $SO_2$ zugegeben worden ist.

Beispiel 3: Herstellung von Test-Vollzellen

Die in den nachfolgend beschriebenen Experimenten verwendeten Test-Vollzellen sind wiederaufladbare Batteriezellen mit zwei negativen Elektroden und einer positiven Elektrode, welche jeweils durch einen Separator getrennt waren. Die positiven Elektroden wiesen ein aktives Material, einen Leitfähigkeitsvermittler, ein Bindemittel und ein Ableitelement aus Nickel oder Aluminium auf. Das aktive Material der positiven Elektrode ist im jeweiligen Experiment benannt. Die negativen Elektroden enthielten Graphit als aktives Material, ein Bindemittel und ein Ableitelement aus Nickel oder Kupfer. Wenn im Experiment erwähnt, können die negativen Elektroden auch ein Leitfähigkeitsadditiv enthalten. Unter anderem ist das Ziel der Untersuchungen, die Funktionalität der verschiedenen Elektrolyten in einer erfindungsgemäßen Batteriezelle zu bestätigen. Die Test-Vollzellen wurden jeweils mit dem für die Experimente benötigten Elektrolyten, d. h. entweder mit dem Referenzelektrolyten oder einem erfindungsgemäßen Elektrolyten X1, X2, X3 und X4 befüllt. Für jedes Experiment wurden oft mehrere, d.h. zwei bis vier identische Test-Vollzellen hergestellt. Die in den Experimenten vorgestellten Ergebnisse sind dann jeweils Mittelwerte aus den für die identischen Test-Vollzellen erhaltenen Messwerte.

Beispiel 4: Messung in Test-Vollzellen

Deckschichtkapazität:

Die im ersten Zyklus verbrauchte Kapazität für die Bildung einer Deckschicht auf der negativen Elektrode ist ein wichtiges Kriterium für die Qualität einer Batteriezelle. Diese Deckschicht wird beim ersten Laden der Test-Vollzelle auf der negativen Elektrode gebildet. Für diese Deckschichtbildung werden Lithiumionen irreversibel verbraucht (Deckschichtkapazität), sodass der Test-Vollzelle weniger zykelbare Kapazität für die Folgezyklen zur Verfügung steht. Die Deckschichtkapazität in % der Theorie, die zur Bildung der Deckschicht auf der negativen Elektrode verbraucht wurde, berechnet sich gemäß nachfolgend genannter Formel:

$$\text{Deckschichtkapazität [in \% der Theorie]} = (Q_{lad}\,(x\ \text{mAh}) - Q_{ent}\,(y\ \text{mAh}))\ /\ Q_{NEL}$$

$Q_{lad}$ beschreibt die im jeweiligen Experiment vorgegebene Ladungsmenge in mAh; $Q_{ent}$ beschreibt diejenige Ladungsmenge in mAh, die beim anschließenden Entladen der Test-Vollzelle erhalten wurde. Bei $Q_{NEL}$ handelt es sich um die theoretische Kapazität der verwendeten negativen Elektrode. Die theoretische Kapazität berechnet sich z.B. im Fall von Graphit auf einen Wert von 372 mAh/g.

Entladekapazität:

Bei Messungen in Test-Vollzellen wird z.B. die Entladekapazität über die Zykelzahl bestimmt werden. Dazu werden die Test-Vollzellen mit einer bestimmten Ladestromstärke bis zu einem bestimmten oberen Potential geladen. Das entsprechende obere Potential wird so lange gehalten, bis der Ladestrom auf einen bestimmten Wert abgesunken ist. Danach erfolgt die Entladung mit einer bestimmten Entladestromstärke bis zu einem bestimmten Entladepotential. Bei dieser Lademethode spricht man von einer I/U-Ladung. Dieser Vorgang wird je nach gewünschter Zykelzahl wiederholt.

Die oberen Potentiale bzw. das Entladepotential und die jeweiligen Lade- bzw. Entladestromstärken sind in den Experimenten benannt. Auch der Wert, auf den der Ladestrom abgesunken sein muss, ist in den Experimenten beschrieben.

Der Begriff "oberes Potential" wird Synonym zu den Begriffen "Ladepotential" "Ladespannung", Ladeschlussspannung" und "obere Potentialgrenze" verwendet. Die Begriffe bezeichnen die Spannung/ das Potential, bis zu welchem eine Zelle oder Batterie mit Hilfe einer Batterieladevorrichtung geladen wird.

Bevorzugt erfolgt die Ladung der Batterie mit einer Stromrate von C/2 und bei einer Temperatur von 22°C.

Der Begriff "Entladepotential" wird Synonym zum Begriff "untere Zellspannung" verwendet. Damit wird die Spannung/ das Potential bezeichnet, bis zu welchem eine Zelle oder Batterie mit Hilfe einer Batterieladevorrichtung entladen wird.

Bevorzugt erfolgt die Entladung der Batterie mit einer Stromrate von C/2 und bei einer Temperatur von 22°C.

Die Entladekapazität wird aus dem Entladestrom und der Zeit, bis die Kriterien zur Beendigung der Entladung erfüllt sind, erhalten. Die dazugehörigen

Figuren zeigen Mittelwerte für die Entladekapazitäten als Funktion der Zykelzahl. Diese Mittelwerte der Entladekapazitäten werden, oft normiert auf 100% der Startkapazität und jeweils in Prozent der Nennkapazität ausgedrückt.

Experiment 1: Verhalten von negativen Elektroden in Halbzellen mit Elektrolyt X1

Die Experimente wurden in Halbzellen mit metallischem Lithium als Gegen- und Bezugselektrode durchgeführt. Die Arbeitselektrode war eine Graphitelektrode. Die Halbzellen wurden mit dem Elektrolyten X1 befüllt.

Die Halbzelle wurde mit einer Lade-/ Entlade-Rate von 0,02C bis zu einem Potential von 0,03 Volt geladen und bis zu einem Potential von 0,5 Volt entladen. Figur 6 zeigt die Potentiale der Ladekurve und Entladekurve für den zweiten Zyklus der Halbzelle. Die durchgezogene Kurve entspricht den Potentialen der Ladekurve und die gestrichelte Kurve entspricht den Potentialen der Entladekurve.

Die Lade- und Entladekurven zeigen ein batterietypisches Verhalten. Die grundsätzliche Funktionalität des Elektrolyten X1 in einer Halbzelle ist damit gezeigt.

Experiment 2: Verhalten von Test-Vollzellen mit Elektrolyt X1

Der Elektrolyt X1 wurden für dieses Experiment in einer Test-Vollzelle untersucht. Der Aufbau entsprach dem in Beispiel 3 beschriebenen Aufbau. Die negative Elektrode hatte Graphit als aktives Elektrodenmaterial, bei der positiven Elektrode wurde Nickelmangancobaltoxid (NMC622) als aktives Elektrodenmaterial verwendet.

Zur Ermittlung der Entladekapazität wurden die Test-Vollzelle mit einer Lade-/ EntladeStromstärke von 100 mA bis zu einem Potential von 4,6 Volt geladen und bis zu einem Potential von 2,5 Volt entladen.

Figur 7 zeigt den Potentialverlauf beim Laden und Entladen der Test-Vollzelle im zweiten Zyklus. Der Potentialverlauf zeigt ein batterietypisches Verhalten. Die grundsätzliche Funktionalität des Elektrolyten X1 in einer Batteriezelle ist damit gezeigt.

Experiment 3: Verhalten von Test-Vollzellen mit einer Mischung aus 9 Gew% der Elektrolyte X2, X3 und X4 und aus 91 Gew% Referenzelektrolyten

Zur Untersuchung der Elektrolyte X2, X3 und X4 wurde eine Mischung dieser Elektrolyte hergestellt. 9 Gew% dieser Mischung wurden mit 91 Gew% des Referenzelektrolyten gemischt. Der so erhaltene Elektrolyt wird mit "Elektrolyt 9% / 91%" bezeichnet. Mit dem Elektrolyt 9% / 91% wurden verschiedene Experimente durchgeführt. Zum einen wurden die Deckschichtkapazitäten des Elektrolyten ermittelt. Zum anderen wurde die Entladekapazitäten in dem Elektrolyten bestimmt. Zum Vergleich wurden beide Experimente auch im Referenzelektrolyten durchgeführt.

Der Referenzelektrolyt und der Elektrolyt 9% / 91% wurden für dieses Experiment jeweils in einer Test-Vollzelle untersucht. Der Aufbau entsprach dem in Beispiel 3 beschriebenen Aufbau. Die negative Elektrode hatte Graphit als aktives Elektrodenmaterial, bei der positiven Elektrode wurde Nickelmangancobaltoxid (NMC622) als aktives Elektrodenmaterial verwendet.

Figur 8 zeigt das Potential in Volt [V] der Test-Vollzellen beim Laden als Funktion der Kapazität, die bezogen ist auf die theoretische Kapazität der negativen Elektrode. Hierbei zeigt die gepunktete Linie die Ergebnisse für den Referenzelektrolyten und die durchgezogene Linie die Ergebnisse für den erfindungsgemäßen Elektrolyten 9% / 91%. Die zwei dargestellten Kurven zeigen die Ergebnisse jeweils einer repräsentativen Einzelzelle. Zunächst wurden die Test-Vollzellen mit einer Stromstärke von 15 mA bis zu einer Kapazität von 125 mAh geladen. Danach erfolgte die Entladung der Test-Vollzellen mit einer Stromstärke von 15 mA bis zum Erreichen eines Potentials von 2,5 Volt. Aus dem Kapazitätsverhalten in diesem ersten Zyklus wird die Deckschichtkapazität ermittelt.

Die Kapazitätsverluste liegen bei 6,64 % für den Elektrolyt 9% / 91% und bei 5,62 % für den Referenzelektrolyten. Die Kapazität für die Deckschichtbildung ist beim erfindungsgemäßen Elektrolyten geringfügig höher als beim Referenzelektrolyten. Ein Wert im Bereich von 6,6% für den Kapazitätsverlust ist ein sehr gutes Ergebnis.

Zur Ermittlung der Entladekapazitäten (siehe Beispiel 4) wurden die beiden oben beschriebenen Test-Vollzellen nach der Ermittlung der Deckschichtkapazität mit einer Stromstärke von 100 mA bis zu einem Potential von 4,4 Volt geladen. Danach erfolgte die Entladung mit einer Stromstärke von 100 mA bis zu einem Entladepotential von 2,5 Volt. Figur 9 zeigt während 100 Zyklen die Entladekapazitäten in % [% Nennkapazität] der Test-Vollzellen als Funktion der Zykelzahl. Hierbei zeigt die gepunktete Linie die Ergebnisse für den Referenzelektrolyten und die durchgezogene Linie die Ergebnisse für den erfindungsgemäßen Elektrolyten 9% / 91%. Während der Messung der Test-Vollzelle mit dem Elektrolyten 9% / 91% gab es von Zyklus 4 bis Zyklus 34 eine Störung der Messung. Die Werte liegen deshalb in diesem Bereich etwas niedriger. Ab Zyklus 35 war die Störung behoben. Beide Test-Vollzellen zeigen einen sehr flachen Verlauf der Entladekapazität. Der Elektrolyt 9% / 91% ist für den Betrieb in einer Batteriezelle sehr gut geeignet.

Experiment 4: Verhalten von Test-Vollzellen mit einer Mischung aus 30 Gew% der Elektrolyte X2, X3 und X4 und aus 70 Gew% Referenzelektrolyten

Zur weiteren Untersuchung der Elektrolyte X2, X3 und X4 wurde eine Mischung dieser Elektrolyte hergestellt.

Diesmal wurden 30 Gew% dieser Mischung mit 70 Gew% des Referenzelektrolyten gemischt. Der so erhaltene Elektrolyt wird mit "Elektrolyt 30% / 70%" bezeichnet. Mit dem Elektrolyt 30% / 70% wurden die identischen Untersuchungen wie mit dem in Experiment 3 beschriebenen Elektrolyt 9% / 91% durchgeführt. Die Mess-Parameter können dem Experiment 3 entnommen werden. Zum einen wurden die Deckschichtkapazitäten des Elektrolyten ermittelt. Zum anderen wurde die Entladekapazitäten in dem Elektrolyten bestimmt. Zum Vergleich wurden beide Experimente auch im Referenzelektrolyten durchgeführt.

Figur 10 zeigt das Potential in Volt der Test-Vollzellen beim Laden der Zelle als Funktion der Kapazität, die bezogen ist auf die theoretische Kapazität der negativen Elektrode. Hierbei zeigt die gepunktete Linie die Ergebnisse für den Referenzelektrolyten und die durchgezogene Linie die Ergebnisse für den erfindungsgemäßen Elektrolyten 30% / 70%. Die Kapazitätsverluste liegen bei 5,63 % für den Elektrolyt 30% / 70% und bei 6,09 % für den Referenzelektrolyten. Die Kapazität für die Deckschichtbildung ist beim erfindungsgemäßen Elektrolyten geringer als beim Referenzelektrolyten. Ein Wert im Bereich von 5,6% für den Kapazitätsverlust ist ein hervorragendes Ergebnis.

Figur 11 zeigt während 200 Zyklen die Entladekapazitäten in % [% Nennkapazität] der Test-Vollzellen als Funktion der Zykelzahl. Hierbei zeigt die gepunktete Linie die Ergebnisse für den Referenzelektrolyten und die durchgezogene Linie die Ergebnisse für den erfindungsgemäßen Elektrolyten 30% / 70%. Beide Test-Vollzellen zeigen einen sehr flachen Verlauf der Entladekapazität, wobei die Kurve des Elektrolyten 30% / 70% etwas stabiler ist. Der Elektrolyt 30% / 70% ist für den Betrieb in einer Batteriezelle hervorragend geeignet.

Experiment 5: Bestimmung der Leitfähigkeit des Elektrolyten X1

Zur Bestimmung der Leitfähigkeit wurde der Elektrolyt X1 mit verschiedenen Konzentrationen der Verbindung X1 hergestellt. Für jede Konzentration der Verbindung wurde die Leitfähigkeit des Elektrolyten bestimmt, indem ein konduktives Messverfahren verwendet wurde. Dabei wurde nach Temperierung ein Vierelektrodensensor berührend in die Lösung gehalten und in einem Messbereich von 0,02 - 500 mS/cm gemessen.

Figur 12 zeigt die Leitfähigkeit des Elektrolyten X1 in Abhängigkeit der Konzentration der Verbindung X1. Zu sehen ist ein Maximum der Leitfähigkeit bei einer Konzentration der Verbindung X1 von 0,6 mol/L mit einem Wert von ca. 11,3 mS/cm.

## Patentansprüche

1. Auf $SO_2$-basierender Elektrolyt für eine wiederaufladbare Batteriezelle, enthaltend zumindest ein erstes Leitsalz, welches die Formel (I)

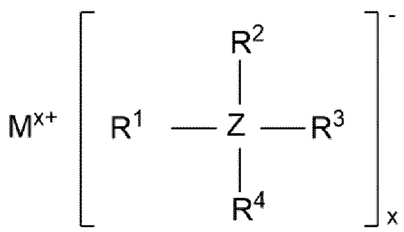

Formel (I)

**aufweist,** wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^1$ und $R^2$ unabhängig voneinander ausgewählt sind aus der Gruppe, die gebildet wird von einem Halogenatom,

einer Hydroxygruppe, einer chemischen Gruppe $-OR^5$ und
einem Chelatliganden, der mindestens von zwei der Substituenten $R^1$, $R^2$, $R^3$ und $R^4$ gemeinsam gebildet wird und an Z koordiniert ist;

- der Substituent $R^3$ ausgewählt ist aus der Gruppe, die gebildet wird von einer Hydroxygruppe, einer chemischen

Gruppe $-OR^5$ und einem Chelatliganden, der mindestens von zwei der Substituenten $R^1$, $R^2$, $R^3$ und $R^4$ gemeinsam gebildet wird und an Z koordiniert ist;

- der Substituent $R^4$ ausgewählt ist aus der Gruppe, die gebildet wird von einem Halogenatom, einer Hydroxygruppe und einem Chelatliganden, der mindestens von zwei der Substituenten $R^1$, $R^2$, $R^3$ und $R^4$ gemeinsam gebildet wird und an Z koordiniert ist;
- der Substituent $R^5$ ausgewählt ist aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl; und
- optional zumindest ein einzelnes Atom oder eine Atomgruppe des Substituenten $R^5$ durch ein Halogenatom oder durch eine chemische Gruppe substituiert ist, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl, Benzyl, und voll- und teilhalogeniertem $C_1$-$C_4$-Alkyl, $C_2$-$C_4$-Alkenyl, $C_2$-$C_4$-Alkinyl, Phenyl und Benzyl;
- Z Aluminium oder Bor ist; und
- die Stoffmengenkonzentration des ersten Leitsalzes im Bereich von 0,05 mol/l bis 10 mol/l bezogen auf das Gesamtvolumen des Elektrolyten ist.

**2.** Elektrolyt nach Anspruch 1, bei welchem der Substituent $R^5$ ausgewählt ist aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

**3.** Elektrolyt nach Anspruch 1 oder 2, bei welchem zumindest ein einzelnes Atom oder eine Atomgruppe des Substituenten $R^5$ durch ein Fluoratom, oder durch eine chemische Gruppe substituiert ist, wobei die chemische Gruppe ausgewählt ist aus der Gruppe, die gebildet wird von voll- und teilfluoriertem, $C_1$-$C_4$-Alkyl, $C_2$-$C_4$-Alkenyl, $C_2$-$C_4$-Alkinyl, Phenyl und Benzyl.

**4.** Elektrolyt nach einem der Ansprüche 1 bis 3, bei welchem zumindest eine Atomgruppe des Substituenten $R^5$ eine $CF_3$-Gruppe ist.

**5.** Elektrolyt nach einem der Ansprüche 1 bis 4, bei welchem der Chelatligand zweizähnig, insbesondere gemäß der Formel $-O-R^5-O-$, oder mehrzähnig ausgebildet ist.

**6.** Elektrolyt nach einem der Ansprüche 1 bis 5, bei welchem das erste Leitsalz ausgewählt ist aus der Gruppe, die gebildet wird von

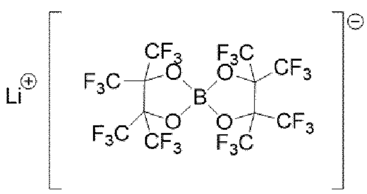

$LiB[O_2C_2(CF_3)_4]_2$

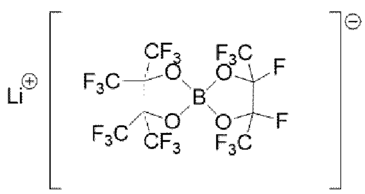

$LiB[(O_2C_2(CF_3)_4)(OCF(CF_3))_2]$

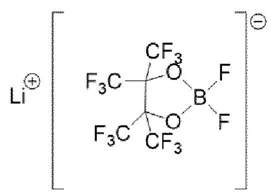

$LiBF_2(O_2C_2(CF_3)_4)$

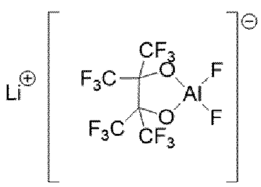

$LiAlF_2(O_2C_2(CF_3)_4)$

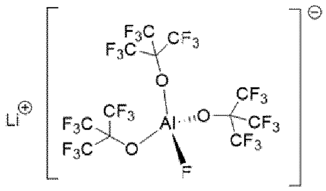

$LiAlF(OC(CF_3)_3)_3$

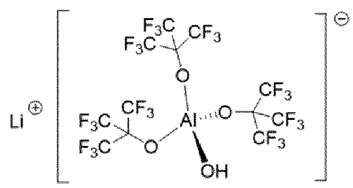

$Li[Al(OH)(OC(CF_3)_3)_3]$

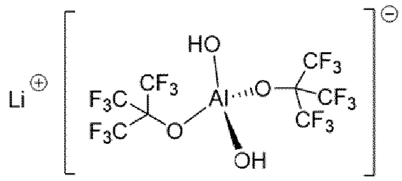

$Li[Al(OH)_2(OC(CF_3)_3)_2]$

**7.** Elektrolyt nach einem der Ansprüche 1 bis 6,
welcher mindestens ein zweites, von dem ersten Leitsalz nach Formel (I) abweichendes Leitsalz enthält.

**8.** Elektrolyt nach Anspruch 7, bei welchem das zweite Leitsalz die Formel (II)

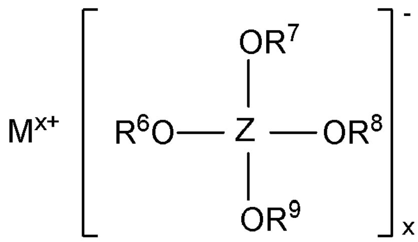

Formel (II)

aufweist, wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^6$, $R^7$, $R^8$ und $R^9$ unabhängig voneinander ausgewählt sind aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl; und
- wobei Z Aluminium oder Bor ist.

**9.** Elektrolyt nach Anspruch 7,
bei welchem das zweite Leitsalz eine Alkalimetallverbindung, insbesondere eine Lithiumverbindung ist, die ausgewählt ist aus der Gruppe, die gebildet wird von einem Aluminat, bevorzugt ein Lithiumtetrahalogenoaluminat, insbesondere ein Lithiumtetrachloroaluminat, einem Halogenid, einem Oxalat, einem Borat, einem Phosphat, einem Arsenat und einem Gallat.

**10.** Elektrolyt nach einem der Ansprüche 1 bis 9,
welcher mindestens ein Additiv enthält.

**11.** Elektrolyt nach Anspruch 10,
bei welchem das Additiv ausgewählt ist aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluoro(oxalato)borat, Lithiumtetrafluoro(oxalato)phosphat, Lithiumoxalat, 2-Vinylpyridin, 4-Vinylpyridin, cyclische Exomethylencarbonate, Sultonen, cyclischen und acyclischen Sulfonaten, acyclischen Sulfiten, cyclischen und acyclischen Sulfinaten, organischen Estern, anorganischen Säuren, acyclischen und cyclischen Alkanen,

welche acyclischen und cyclischen Alkane einen Siedepunkt bei 1 bar von mindestens 36 ° C aufweisen, aromatischen Verbindungen, halogenierten cyclischen und acyclischen Sulfonylimiden, halogenierten cyclischen und acyclischen Phosphatestern, halogenierten cyclischen und acyclischen Phosphinen, halogenierten cyclischen und acyclischen Phosphiten, halogenierten cyclischen und acyclischen Phosphazenen, halogenierten cyclischen und acyclischen Silylaminen, halogenierten cyclischen und acyclischen halogenierten Estern, halogenierten cyclischen und acyclischen Amiden, halogenierten cyclischen und acyclischen Anhydriden und halogenierten organischen Heterocyclen.

**12.** Elektrolyt nach einem der Ansprüche 1 bis 11,

welcher die Zusammensetzung

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs,

bezogen auf das Gesamtgewicht der Elektrolytzusammensetzung aufweist.

**13.** Elektrolyt nach einem der Ansprüche 1 bis 12,
bei welchem die Stoffmengenkonzentration des ersten Leitsalzes im Bereich von von 0,1 mol/l bis 6 mol/l und bevorzugt von 0,2 mol/l bis 3,5 mol/l bezogen auf das Gesamtvolumen des Elektrolyten ist.

**14.** Elektrolyt nach einem der Ansprüche 1 bis 13,
bei welchem der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält.

**15.** Wiederaufladbare Batteriezelle (2, 20, 40), enthaltend einen Elektrolyten nach zumindest einem der zuvor genannten Ansprüche, ein aktives Metall, zumindest eine positive Elektrode (4, 23, 44), zumindest eine negative Elektrode (5, 22, 45) und ein Gehäuse (1, 28).

**16.** Wiederaufladbare Batteriezelle (2, 20, 40) nach Anspruch 15,
bei welcher das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium

ist.

**17.** Wiederaufladbare Batteriezelle (2, 20, 40) nach Anspruch 15 oder 16,
bei welcher die negative Elektrode (5, 22, 45) eine Insertionselektrode ist, die vorzugsweise Kohlenstoff als aktives Material, insbesondere in der Modifikation Graphit enthält.

**18.** Wiederaufladbare Batteriezelle (2, 20, 40) nach einem der Ansprüche 15 bis 17, bei welcher die positive Elektrode (4, 23, 44) als aktives Material zumindest eine Interkalationsverbindung enthält, die vorzugsweise die Zusammensetzung $Li_xM'_yM''_zO_a$ aufweist, worin

- M' mindestens ein Metall ist, das ausgewählt ist aus der Gruppe, die gebildet wird von den Elementen Ti, V, Cr, Mn, Fe, Co, Ni, Cu und Zn;
- M" mindestens ein Element ist, das ausgewählt ist aus der Gruppe, die gebildet wird von den Elementen der 2, 3, 4, 5, 6, 7, 8, 9, 10, 11, 12, 13, 14, 15 und 16 des Periodensystems der Elemente,
- x und y unabhängig voneinander größer 0 sind,
- z größer oder gleich 0 ist und
- a größer 0 ist.

**19.** Wiederaufladbare Batteriezelle (2, 20, 40) nach Anspruch 18,
bei welcher die Interkalationsverbindung die Zusammensetzung $Li_xM'_yM''_zO_a$ aufweist, in welcher M' Eisen und M" Phosphor sind und wobei x, y und z bevorzugt gleich 1 und a bevorzugt gleich 4 ist.

**20.** Wiederaufladbare Batteriezelle (2, 20, 40) nach Anspruch 18,
bei welcher die Interkalationsverbindung die Zusammensetzung $Li_xM'_yM''_zO_a$ aufweist, in welcher M' Mangan und M" Cobalt sind und wobei x, y und z vorzugsweise gleich 1 und a vorzugsweise gleich 4 ist.

**21.** Wiederaufladbare Batteriezelle (2, 20, 40) nach Anspruch 18 oder 20,
bei welcher bei welcher die Interkalationsverbindung die Zusammensetzung $Li_xM'_yM''_zO_a$ aufweist, in welcher M' Nickel und Mangan umfasst und M" Cobalt ist.

**22.** Wiederaufladbare Batteriezelle (2, 20, 40) nach einem der Ansprüche 15 bis 21, bei welcher die positive Elektrode (4, 23, 44) zumindest eine Metallverbindung enthält, die ausgewählt ist aus der Gruppe, die gebildet wird von einem Metalloxid, einem Metallhalogenid und einem Metallphosphat, wobei das Metall der Metallverbindung vorzugsweise ein Übergangsmetall der Ordnungszahlen 22 bis 28 des Periodensystems der Elemente, insbesondere Kobalt, Nickel, Mangan oder Eisen ist.

**23.** Wiederaufladbare Batteriezelle (2, 20, 40) nach einem der Ansprüche 15 bis 22, bei welcher die positive Elektrode (4, 23, 44) und/oder die negative Elektrode (5, 22, 45) ein Ableitelement (26, 27) aufweisen, das vorzugsweise

- entweder planar in Form eines Metallblechs oder einer Metallfolie oder
- dreidimensional in Form einer porösen Metallstruktur, insbesondere in Form eines Metallschaums (18)

ausgebildet ist.

**24.** Wiederaufladbare Batteriezelle (2, 20, 40) nach einem der Ansprüche 15 bis 23, bei welcher die positive Elektrode (4, 23, 44) und/oder die negative Elektrode (5, 22, 45) zumindest ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, oder

ein Bindemittel, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist, oder
ein Bindemittel, welches aus einem Polymer besteht, das auf monomeren Styrol- und Butadien-Struktureinheiten basiert, oder ein Bindemittel aus der Gruppe der Carboxymethylcellulosen enthält,
wobei das Bindemittel vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode oder negativen Elektrode vorliegt.

**25.** Wiederaufladbare Batteriezelle (2, 20, 40) nach einem der Ansprüche 15 bis 24, welche mehrere positive Elektroden (4, 23, 44) und mehrere Elektroden (5, 22, 45) umfasst, die alternierend gestapelt in dem Gehäuse (1) angeordnet sind, wobei die positiven Elektroden (4, 23, 44) und die negativen Elektroden (5, 22, 45) vorzugsweise jeweils durch Separatoren (11, 21) voneinander elektrisch getrennt sind.

**Claims**

**1.** $SO_2$-based electrolyte for a rechargeable battery cell, containing at least a first conducting salt which has the formula (I)

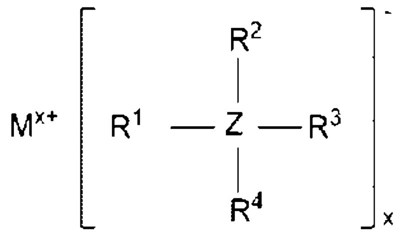

Formula (I)

wherein

- M is a metal which is selected from the group which is formed by alkali metals, earth alkali metals, metals of group 12 of the periodic table of elements and aluminum;
- x is a whole number from 1 to 3;
- the substituents $R^1$ and $R^2$ are selected independently of each other from the group which is formed by a halogen atom,

  a hydroxy group, a chemical group $-OR^5$ and
  a chelating ligand, which is formed from at least two of the substituents $R^1$, $R^2$, $R^3$ and $R^4$ together and is coordinated at Z;

- the substituent $R^3$ is selected from the group which is formed by a hydroxy group, a chemical group $-OR^5$ and

a chelating ligand, which is formed from at least two of the substituents $R^1$, $R^2$, $R^3$ and $R^4$ together and is coordinated at Z;

- the substituent $R^4$ is selected from the group which is formed by a halogen atom, a hydroxy group and a chelating ligand, which is formed from at least two of the substituents $R^1$, $R^2$, $R^3$ and $R^4$ together and is coordinated at Z;
- the substituent $R^5$ is selected from the group which is formed by $C_1$-$C_{10}$ alkyl, $C_2$-$C_{10}$ alkenyl, $C_2$-$C_{10}$ alkinyl, $C_3$-$C_{10}$ cycloalkyl, $C_6$-$C_{14}$ aryl and $C_5$-$C_{14}$ heteroaryl; and
- optionally at least one individual atom or atom group of the substituent $R^5$ is substituted by a halogen atom or by a chemical group, wherein the chemical group is selected from the group which is formed by $C_1$-$C_4$ alkyl, $C_2$-$C_4$ alkenyl, $C_2$-$C_4$ alkinyl, phenyl, benzyl, and fully and partially halogenated $C_1$-$C_4$ alkyl, $C_2$-$C_4$ alkenyl, $C_2$-$C_4$ alkinyl, phenyl and benzyl;
- Z is aluminum or boron; and
- the material quantity concentration of the first conducting salt is in the range from 0.05 mol/l to 10 mol/l with respect to the total volume of the electrolyte.

**2.** Electrolyte according to claim 1,
in which the substituent $R^5$ is selected from the group which is formed by

- $C_1$-$C_6$ alkyl; preferably $C_2$-$C_4$ alkyl; most preferably from the alkyl groups 2-propyl, methyl and ethyl;
- $C_2$-$C_6$ alkenyl; preferably from $C_2$-$C_4$ alkenyl; most preferably from the alkenyl groups ethenyl and propenyl;
- $C_2$-$C_6$ alkinyl; preferably $C_2$-$C_4$ alkinyl;
- $C_3$-$C_6$ cycloalkyl;
- phenyl; and
- $C_5$-$C_7$ heteroaryl.

**3.** Electrolyte according to claim 1 or 2,
in which at least one individual atom or atom group of the substituent $R^5$ is substituted by a fluorine atom or by a chemical group, wherein the chemical group is selected from the group which is formed by fully and partially fluorinated $C_1$-$C_4$ alkyl, $C_2$-$C_4$ alkenyl, $C_2$-$C_4$ alkinyl, phenyl and benzyl.

**4.** Electrolyte according to any one of claims 1 to 3,
in which at least one atom group of the substituent $R^5$ is a $CF_3$ group.

**5.** Electrolyte according to any one of claims 1 to 4, in which the chelating ligand is formed in a bidentate manner, in particular in accordance with the formula $-O-R^5-O-$, or in a multidentate manner.

**6.** Electrolyte according to any one of claims 1 to 5, in which the first conducting salt is selected from the group which is formed by

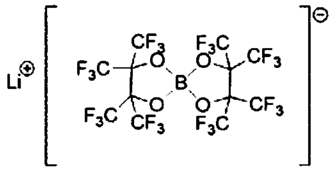

$LiB[O_2C_2(CF_3)_4]_2$

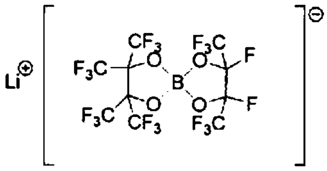

$LiB[(O_2C_2(CF_3)_4)(OCF(CF_3))_2]$

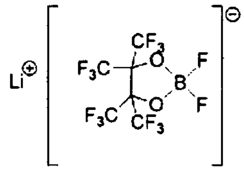

$LiBF_2(O_2C_2(CF_3)_4)$

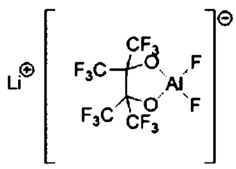

$LiAlF_2(O_2C_2(CF_3)_4)$

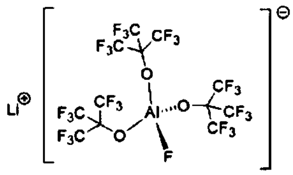

$LiAlF(OC(CF_3)_3)_3$

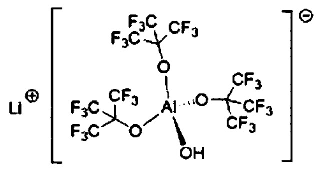

$Li[Al(OH)(OC(CF_3)_3)_3]$

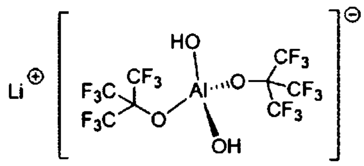

$Li[Al(OH)_2(OC(CF_3)_3)_2]$

**7.** Electrolyte according to any one of claims 1 to 6, which contains at least a second conducting salt which is different from the first conducting salt according to the formula (I).

**8.** Electrolyte according to claim 7, in which the second conducting salt has the formula (II)

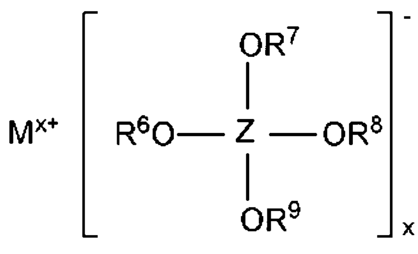

Formula (II)

wherein

- M is a metal which is selected from the group which is formed by alkali metals, earth alkali metals, metals of group 12 of the periodic table of elements and aluminum;
- x is a whole number from 1 to 3;
- the substituents $R^6$, $R^7$, $R^8$ and $R^9$ are selected independently of each other from the group which is formed by $C_1$-$C_{10}$ alkyl, $C_2$-$C_{10}$ alkenyl, $C_2$-$C_{10}$ alkinyl, $C_3$-$C_{10}$ cycloalkyl, $C_6$-$C_{14}$ aryl und $C_5$-$C_{14}$ heteroaryl; and
- wherein Z is aluminum or boron.

**9.** Electrolyte according to claim 7,
in which the second conducting salt is an alkali metal compound, in particular a lithium compound which is selected from the group which is formed by an aluminate, preferably a lithium tetrahalogenaluminate, in particular a lithium tetrachloroaluminate, a halide, an oxalate, a borate, a phosphate, an arsenate and a gallate.

**10.** Electrolyte according to any one of claims 1 to 9,
which contains at least one additive.

**11.** Electrolyte according to claim 10,
in which the additive is selected from the group which is formed by vinylene carbonate and the derivates thereof, vinylethylene carbonate and the derivates thereof, methyl ethylene carbonate and the derivates thereof, lithium(bi-oxalato)borate, lithium difluoro(oxalato)borate, lithium tetrafluoro(oxalato)phosphate, lithium oxalate, 2-vinylpyridine, 4-vinylpyridine, cyclical exomethylene carbonate, sultones, cyclical and acyclical sulfonates, acyclical sulphites, cyclical and acyclical sulfinates, organic esters, inorganic acids, acyclical and cyclical alkanes, which acyclical and cyclical alkanes have a boiling point at 1 bar of at least 36 ° C, aromatic compounds, halogenated cyclical and acyclical sulfonylimides, halogenated cyclical and acyclical phosphate esters, halogenated cyclical and acyclical phosphines, halogenated cyclical and acyclical phosphites, halogenated cyclical and acyclical phosphazenes, halogenated cyclical and acyclical silylamines, halogenated cyclical and acyclical halogenated esters, halogenated cyclical and acyclical amides, halogenated cyclical and acyclical anhydrides and halogenated organic heterocyclenes.

**12.** Electrolyte according to any one of claims 1 to 11,

which has the composition

(i) 5 to 99.4 % by weight of sulfur dioxide,
(ii) 0.6 to 95 % by weight of the first conducting salt,
(iii) 0 to 25 % by weight of the second conducting salt, and
(iv) 0 to 10 % by weight of the additive,

with respect to the total weight of the electrolyte composition.

**13.** Electrolyte according to any one of claims 1 to 12,
in which the material quantity concentration of the first conducting salt is in the range from 0.1 mol/l to 6 mol/l and preferably from 0.2 mol/l to 3.5 mol/l with respect to the total volume of the electrolyte.

**14.** Electrolyte according to any one of claims 1 to 13,
in which the electrolyte contains at least 0.1 mol $SO_2$, preferably at least 1 mol $SO_2$, more preferably at least 5 mol $SO_2$, more preferably at least 10 mol $SO_2$ and most preferably at least 20 mol $SO_2$ per mol of conducting salt.

**15.** Rechargeable battery cell (2, 20, 40) containing an electrolyte according to at least one of the above-mentioned claims, an active metal, at least one positive electrode (4, 23, 44), at least one negative electrode (5, 22, 45) and a housing (1, 28).

**16.** Rechargeable battery cell (2, 20, 40) according to claim 15,
in which the active metal is

- an alkali metal, in particular lithium or sodium;
- an earth alkali metal, in particular calcium;
- a metal of group 12 of the periodic table, in partcular zinc; or
- aluminum.

**17.** Rechargeable battery cell (2, 20, 40) according to claim 15 or 16,
in which the negative electrode (5, 22, 45) is an insertion electrode which preferably contains carbon as an active material, in particular in the modification graphite.

**18.** Rechargeable battery cell (2, 20, 40) according to any one of claims 15 to 17,
in which the positive electrode (4, 23, 44) contains as an active material at least one intercalation compound, which preferably has the composition $Li_xM'_yM''_zO_a$, wherein

- M’ is at least one metal which is selected from the group which is formed by the elements Ti, V, Cr, Mn, Fe, Co, Ni, Cu and Zn;
- M" is at least one element which is selected from the group which is formed by the elements 2, 3, 4, 5, 6, 7, 8, 9, 10, 11, 12, 13, 14, 15 and 16 of the periodic table of elements,
- x and y are greater than 0 independently of each other,
- z is greater than or equal to 0 and
- a is greater than 0.

**19.** Rechargeable battery cell (2, 20, 40) according to claim 18,
in which the intercalation compound has the composition $Li_xM'_yM''_zO_a$, in which M’ is iron and M" is phosphorus and wherein x, y and z are preferably equal to 1 and a is preferably equal to 4.

**20.** Rechargeable battery cell (2, 20, 40) according to claim 18,
in which the intercalation compound has the composition $Li_xM'_yM''_zO_a$, in which M’ is manganese and M" is cobalt and wherein x, y and z are preferably equal to 1 and a is preferably equal to 4.

**21.** Rechargeable battery cell (2, 20, 40) according to claim 18 or 20,
in which the intercalation compound has the composition $Li_xM'_yM''_zO_a$, in which M’ comprises nickel and manganese and M" is cobalt.

**22.** Rechargeable battery cell (2, 20, 40) according to any one of claims 15 to 21,
in which the positive electrode (4, 23, 44) contains at least one metal compound which is selected from the group which is formed by a metal oxide, a metal halide and a metal phosphate, wherein the metal of the metal compound is preferably a transition metal with the atomic numbers 22 to 28 of the periodic table of elements, in particular cobalt, nickel, manganese or iron.

**23.** Rechargeable battery cell (2, 20, 40) according to any one of claims 15 to 22,
in which the positive electrode (4, 23, 44) and/or the negative electrode (5, 22, 45) has/have a discharge element (26, 27) which is preferably constructed

- either in a planar manner in the form of a metal sheet or a metal film or
- three-dimensionally in the form of a porous metal structure, in particular in the form of a metal foam (18).

**24.** Rechargeable battery cell (2, 20, 40) according to any one of claims 15 to 23, in which the positive electrode (4, 23, 44) and/or the negative electrode (5, 22, 45) contain(s) at least one binding agent, preferably a fluorinated binding agent, in particular a polyvinylidene fluoride and/or a terpolymer comprising tetrafluoroethylene, hexafluoropropylene and vinylidene fluoride, or

a binding agent comprising a polymer made of monomeric structural units of a conjugated carboxylic acid or an alkali, alkaline earth salt, or ammonium salt of this conjugated carboxylic acid, or a combination thereof, or
a binding agent which comprises a polymer which is based on monomer styrol and butadiene structural units, or contains a binding agent from the group of carboxymethyl celluloses,
wherein the binding agent is preferably present in a concentration of at most 20 % by weight, more preferably at most 15 % by weight, more preferably at most 10 % by weight, more preferably at most 7 % by weight, more preferably at most 5 % by weight, and most preferably at most 2 % by weight, with respect to the total weight of the positive electrode or negative electrode.

**25.** Rechargeable battery cell (2, 20, 40) according to any one of claims 15 to 24, which comprises a plurality of positive electrodes (4, 23, 44) and a plurality of electrodes (5, 22, 45) which are arranged in an alternating stacked state in the housing (1), wherein the positive electrodes (4, 23, 44) and the negative electrodes (5, 22, 45) are preferably electrically separated from each other in each case by means of separators (11, 21).

## Revendications

**1.** Électrolyte à base de $SO_2$ pour une cellule de batterie rechargeable, contenant au moins un premier sel conducteur qui présente la formule (I)

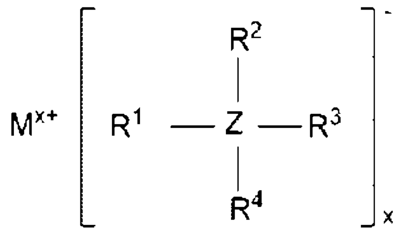

Formule (I)

dans lequel

- M est un métal qui est sélectionné parmi le groupe qui est formé par les métaux alcalins, métaux alcalino-terreux, métaux du groupe 12 du tableau périodique des éléments et l'aluminium ;
- x est un nombre entier de 1 à 3 ;
- les substituants $R^1$ et $R^2$ sont sélectionnés indépendamment l'un de l'autre parmi le groupe qui est formé par un atome d'halogène,

  un groupe hydroxy, un groupe chimique $-OR^5$ et
  un ligand chélatant qui est formé conjointement par au moins deux des substituants $R^1$, $R^2$, $R^3$ et $R^4$ et coordonné à Z ;

- le substituant $R^3$ est sélectionné parmi le groupe qui est formé par un groupe hydroxy, un groupe chimique $-OR^5$ et

un ligand chélatant qui est formé conjointement par au moins deux des substituants $R^1$, $R^2$, $R^3$ et $R^4$ et coordonné à Z ;

- le substituant $R^4$ est sélectionné parmi le groupe qui est formé par un atome d'halogène, un groupe hydroxy et un ligand chélatant qui est formé conjointement par au moins deux des substituants $R^1$, $R^2$, $R^3$ et $R^4$ et coordonné à Z ;
- le substituant $R^5$ est sélectionné parmi le groupe qui est formé par alkyle en $C_1$-$C_{10}$, alcényle en $C_2$-$C_{10}$, alcynyle en $C_2$-$C_{10}$, cycloalkyle en $C_3$-$C_{10}$, aryle en $C_6$-$C_{14}$ et hétéroaryle en $C_5$-$C_{14}$ ; et
- en option, au moins un seul atome ou un groupe d'atomes du substituant $R^5$ est substitué par un atome d'halogène ou par un groupe chimique, dans lequel le groupe chimique est sélectionné parmi le groupe qui est formé par alkyle en $C_1$-$C_4$, alcényle en $C_2$-$C_4$, alcynyle en $C_2$-$C_4$, phényle, benzyle, et alkyle en $C_1$-$C_4$, alcényle en $C_2$-$C_4$, alcynyle en $C_2$-$C_4$ entièrement et partiellement halogéné, phényle et benzyle ;
- Z est l'aluminium ou le bore ; et
- la concentration molaire du premier sel conducteur est dans la plage de 0,05 mol/l à 10 mol/l par rapport au volume total de l'électrolyte.

**2.** Électrolyte selon la revendication 1,
pour lequel le substituant $R^5$ est sélectionné parmi le groupe qui est formé par

- alkyle en $C_1$-$C_6$ ; de préférence par alkyle en $C_2$-$C_4$ ; le plus préférentiellement par les groupes alkyles 2-propyle, méthyle et éthyle ;
- alcényle en $C_2$-$C_6$ ; de préférence par alcényle en $C_2$-$C_4$ ; le plus préférentiellement par les groupes alcényles éthényle et propényle ;
- alcynyle en $C_2$-$C_6$ ; de préférence par alcynyle en $C_2$-$C_4$ ;
- cycloalkyle en $C_3$-$C_6$ ;
- phényle ; et
- hétéroaryle en $C_5$-$C_7$.

**3.** Électrolyte selon la revendication 1 ou 2,
pour lequel au moins un seul atome ou un groupe d'atomes du substituant $R^5$ est substitué par un atome de fluor ou par un groupe chimique, dans lequel le groupe chimique est sélectionné parmi le groupe qui est formé par alkyle en $C_1$-$C_4$, alcényle en $C_2$-$C_4$, alcynyle en $C_2$-$C_4$ entièrement ou partiellement fluoré, phényle et benzyle.

**4.** Électrolyte selon l'une quelconque des revendications 1 à 3, pour lequel au moins un groupe d'atomes du substituant $R^5$ est un groupe $CF_3$.

**5.** Électrolyte selon l'une quelconque des revendications 1 à 4, pour lequel le ligand chélatant est bidenté, en particulier selon la formule O-$R^5$-O-, ou polydenté.

**6.** Électrolyte selon l'une quelconque des revendications 1 à 5, pour lequel le premier sel conducteur est sélectionné parmi le groupe qui est formé par

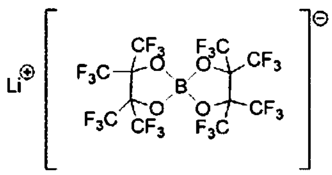

$LiB[O_2C_2(CF_3)_4]_2$

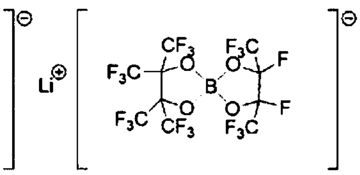

$LiB[(O_2C_2(CF_3)_4)(OCF(CF_3))_2]$

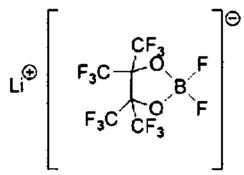

$LiBF_2(O_2C_2(CF_3)_4)$

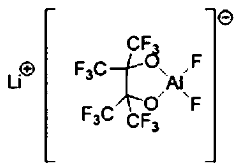

$LiAlF_2(O_2C_2(CF_3)_4)$

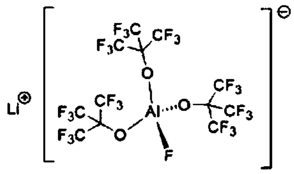

$LiAlF(OC(CF_3)_3)_3$

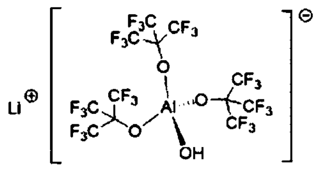

$Li[Al(OH)(OC(CF_3)_3)_3]$

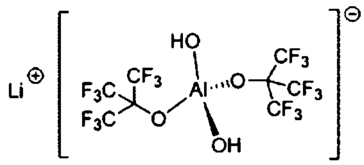

$Li[Al(OH)_2(OC(CF_3)_3)_2]$

**7.** Électrolyte selon l'une quelconque des revendications 1 à 6, qui contient au moins un second conducteur différent du premier sel conducteur selon la formule (I).

**8.** Électrolyte selon la revendication 7, pour lequel le deuxième sel conducteur présente la formule (II)

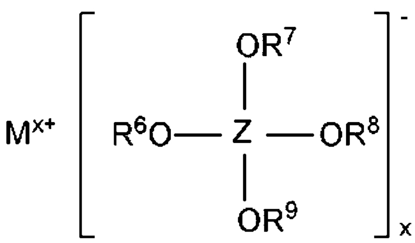

Formule (II)

dans lequel

- M est un métal qui est sélectionné parmi le groupe qui est formé par les métaux alcalins, métaux alcalino-terreux, métaux du groupe 12 du tableau périodique des éléments et l'aluminium ;
- x est un nombre entier de 1 à 3 ;
- les substituants $R^6$, $R^7$, $R^8$ et $R^9$ sont sélectionnés indépendamment les uns des autres parmi le groupe qui formé par alkyle en $C_1$-$C_{10}$, alcényle en $C_2$-$C_{10}$, alcynyle en $C_2$-$C_{10}$, cycloalkyle en $C_3$-$C_{10}$, aryle en $C_6$-$C_{14}$ et hétéroaryle en $C_5$-$C_{14}$ ; et

- dans lequel Z est l'aluminium ou le bore.

**9.** Électrolyte selon la revendication 7, pour lequel le second sel conducteur est un composé métallique alcalin, en particulier un composé de lithium qui est sélectionné parmi le groupe qui est formé par un aluminate, de préférence un tétrahalogénoaluminate de lithium, en particulier un tétrachloroaluminate de lithium, un halogénure, un oxalate, un borate, un phosphate, un arsenate et un gallate.

**10.** Électrolyte selon l'une quelconque des revendications 1 à 9, qui contient au moins un additif.

**11.** Électrolyte selon la revendication 10, pour lequel l'additif est sélectionné parmi le groupe qui est formé par du carbonate de vinylène et ses dérivés, du carbonate de vinyléthylène et ses dérivés, du carbonate de méthyléthylène et ses dérivés, du bis(oxalato)borate de lithium, du difluoro(oxalato)borate de lithium, du tétrafluoro(oxalato)phosphate de lithium, de l'oxalate de lithium, du 2-vinylpyridine, du 4-vinylpyridine, des carbonates d'exométhylène cycliques, des sultones, des sulfonates cycliques et acycliques, des sulfites acycliques, des sulfinates cycliques et acyclische, des esters organiques, des acides anorganiques, des alcanes acycliques et cycliques, lesquels alcanes acycliques et cycliques présentent un point d'ébullition à 1 bar d'au moins 36 °C, des composés aromatiques, des sulfonylimides hélogénés cycliques et acycliques, des esters phosphoriques halogénés cycliques et acycliques, des phosphines halogénées cycliques et acycliques, des phosphites halogénées cycliques et acycliques, des phosphazènes halogénés cycliques et acycliques, des amines silyliques halogénées cycliques et acycliques, des esters halogénés cycliques et halogénés acycliques, des amides halogénés cycliques et acycliques, des anhydrides halogénés cycliques et acycliques et des hétérocycles organiques halogénés.

**12.** Électrolyte selon l'une quelconque des revendications 1 à 11,

qui présente la composition

(i) 5 à 99,4 % en poids de dioxyde de soufre,
(ii) 0,6 à 95 % en poids du premier sel conducteur,
(iii) 0 à 25 % en poids du second sel conducteur et
(iv) 0 à 10 % en poids de l'additif,

par rapport au poids total de la composition d'électrolyte.

**13.** Électrolyte selon l'une quelconque des revendications 1 à 12, pour lequel la concentration molaire du premier sel conducteur est dans la plage de 0,1 mol/l à 6 mol/l, et de préférence de 0,2 mol/l à 3,5 mol/l par rapport au volume total de l'électrolyte.

**14.** Électrolyte selon l'une quelconque des revendications 1 à 13, pour lequel l'électrolyte contient au moins 0,1 mole de $SO_2$, de préférence au moins 1 mole de $SO_2$, plus préférentiellement au moins 5 moles de $SO_2$, plus préférentiellement au moins 10 moles de $SO_2$ et le plus préférentiellement au moins 20 moles de $SO_2$ par mole de sel conducteur.

**15.** Cellule de batterie rechargeable (2, 20, 40) contenant un électrolyte selon au moins l'une quelconque des revendications précédentes, un métal actif, au moins une électrode positive (4, 23, 44), au moins une électrode négative (5, 22, 45) et un boîtier (1, 28).

**16.** Cellule de batterie rechargeable (2, 20, 40) selon la revendication 15, pour laquelle le métal actif est

- un métal alcalin, en particulier du lithium ou du sodium ;
- un métal alcalino-terreux, en particulier du calcium ;
- un métal du groupe 12 du tableau périodique, en particulier le zinc ; ou
- l'aluminium.

**17.** Cellule de batterie rechargeable (2, 20, 40) selon la revendication 15 ou 16,

pour laquelle l'électrode négative (5, 22, 45) est une électrode d'insertion qui contient de préférence du carbone en tant que matériau actif, en particulier dans la modification du graphite.

**18.** Cellule de batterie rechargeable (2, 20, 40) selon l'une quelconque des revendications 15 à 17, pour laquelle l'électrode positive (4, 23, 44) contient en tant que matériau actif au moins un composé d'intercalation qui présente de préférence la composition $Li_xM'_yM''_zO_a$, dans laquelle

- M' est au moins un métal qui est sélectionné parmi le groupe qui est formé par les éléments Ti, V, Cr, Mn, Fe, Co, Ni, Cu et Zn ;
- M" est au moins un élément qui est sélectionné parmi le groupe qui est formé par les éléments des groupes 2, 3, 4, 5, 6, 7, 8, 9, 10, 11, 12, 13, 14, 15 et 16 du tableau périodique des éléments,
- x et y sont indépendamment l'un de l'autre supérieurs à 0,
- z est supérieur ou égal à 0 et
- a est supérieur à 0.

**19.** Cellule de batterie rechargeable (2, 20, 40) selon la revendication 18, pour laquelle le composé d'intercalation présente la composition $Li_xM'_yM''_zO_a$, dans laquelle M' est le fer et M" est le phosphore, et dans laquelle x, y et z sont de préférence égaux à 1 et a est de préférence égal à 4.

**20.** Cellule de batterie rechargeable (2, 20, 40) selon la revendication 18, pour laquelle le composé d'intercalation présente la composition $Li_xM'_yM''_zO_a$, dans laquelle M' est le manganèse et M" est le cobalt, et dans laquelle x, y et z sont de préférence égaux à 1 et a est de préférence égal à 4.

**21.** Cellule de batterie rechargeable (2, 20, 40) selon la revendication 18 ou 20, pour laquelle le composé d'intercalation présente la composition $Li_xM'_yM''_zO_a$, dans laquelle M' comprend le nickel et le manganèse et M" est le cobalt.

**22.** Cellule de batterie rechargeable (2, 20, 40) selon l'une quelconque des revendications 15 à 21, pour laquelle l'électrode positive (4, 23, 44) contient au moins un composé métallique qui est sélectionné parmi le groupe qui est formé par un oxyde métallique, un halogénure métallique et un phosphate métallique, dans laquelle le métal du composé métallique est de préférence un métal de transition des numéros atomiques 22 à 28 du tableau périodique des éléments, en particulier cobalt, nickel, manganèse ou fer.

**23.** Cellule de batterie rechargeable (2, 20, 40) selon l'une quelconque des revendications 15 à 22, dans laquelle l'électrode positive (4, 23, 44) et/ou l'électrode négative (5, 22, 45) présentent un élément conducteur (26, 27) qui est de préférence

- configurée de manière plane sous la forme d'une tôle métallique ou d'une feuille métallique ou
- en trois dimensions sous la forme d'une structure métallique poreuse, en particulier sous la forme d'une mousse métallique (18).

**24.** Cellule de batterie rechargeable (2, 20, 40) selon l'une quelconque des revendications 15 à 23, dans laquelle l'électrode positive (4, 23, 44) et/ou l'électrode négative (5, 22, 45) contient au moins un liant, de préférence un liant fluoré, en particulier un polyfluorure de vinylidène et/ou un terpolymère de tétrafluoroéthylène, d'hexafluoropropylène et de fluorure de vinylidène, ou

un liant qui se compose d'un polymère qui est constitué d'unités de structure monomères d'un acide carboxylique conjugué ou d'un sel alcalin, alcalino-terreux ou d'ammonium de cet acide carboxylique conjugué ou d'une combinaison de ceux-ci ou
un liant qui se compose d'un polymère qui se base sur des unités de structure de styrène et butadiène monomères, ou contient un liant parmi le groupe des carboxyméthylcelluloses,
dans laquelle le liant se présente de préférence dans une concentration d'au plus 20 % en poids, plus préférentiellement d'au plus 15 % en poids, plus préférentiellement d'au plus 10 % en poids, plus préférentiellement d'au plus 7 % en poids, plus préférentiellement d'au plus 5 % en poids et plus préférentiellement d'au plus 2% en poids par rapport au poids total de l'électrode positive ou de l'électrode négative.

**25.** Cellule de batterie rechargeable (2, 20, 40) selon l'une quelconque des revendications 15 à 24, qui comprend plusieurs électrodes positives (4, 23, 44) et plusieurs électrodes (5, 22, 45) qui sont agencées en alternance empilées

dans le boîtier (1), dans laquelle les électrodes positives (4, 23, 44) et les électrodes négatives (5, 22, 45) sont de préférence séparées électriquement les unes des autres respectivement par des séparateurs (11, 21).

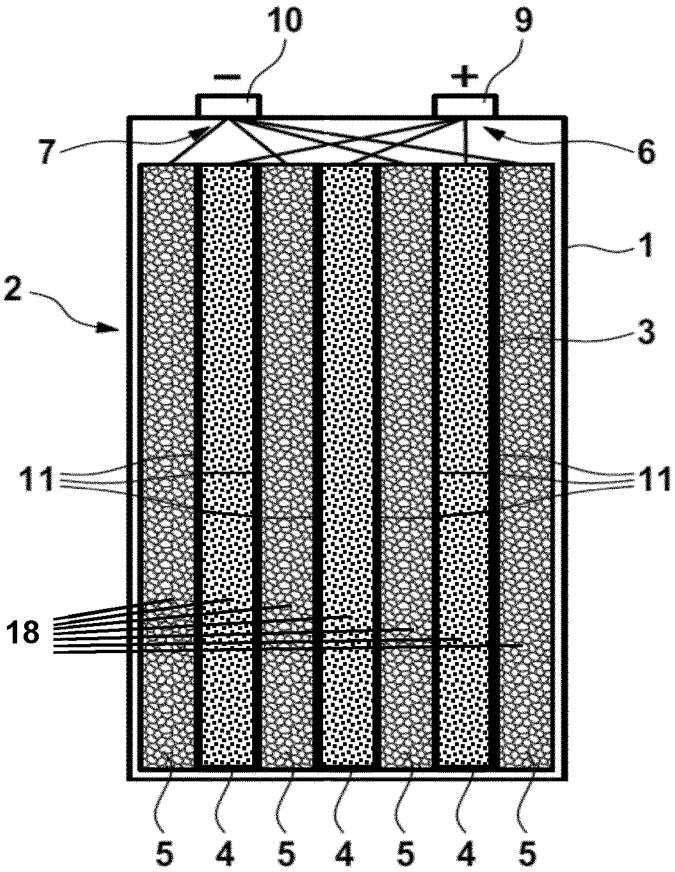


FIG. 1

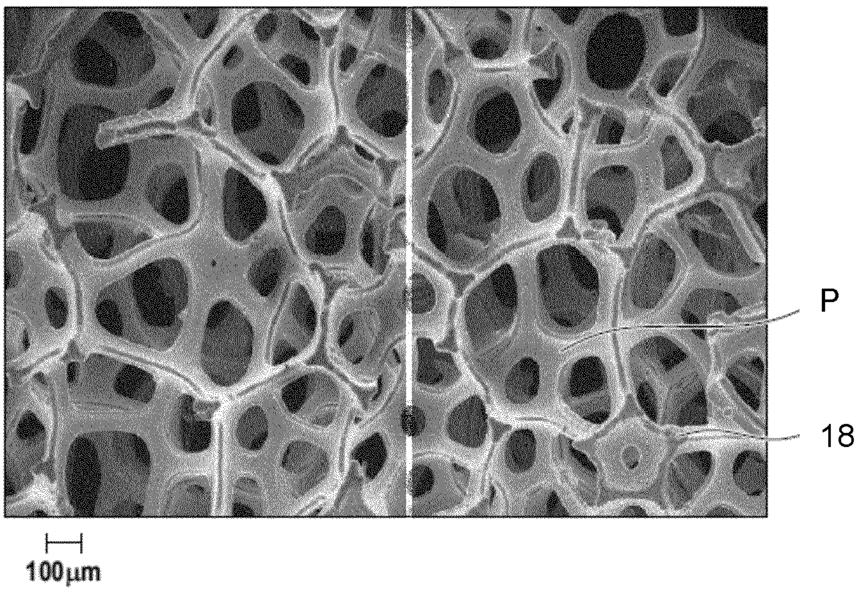


FIG. 2

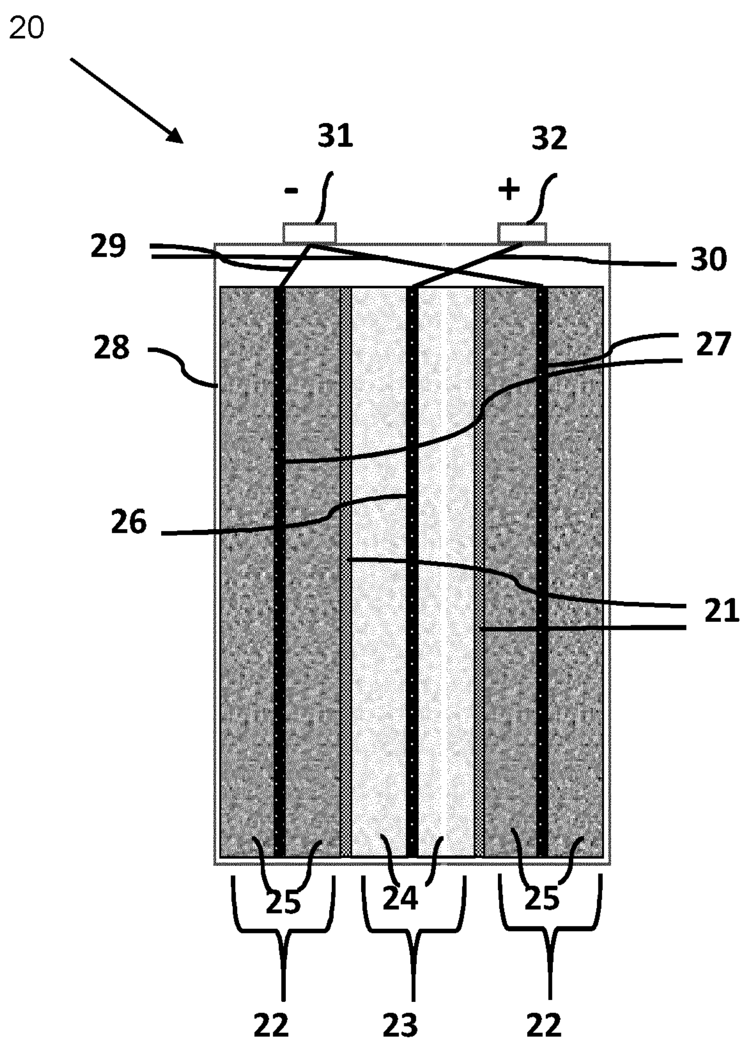


FIG. 3

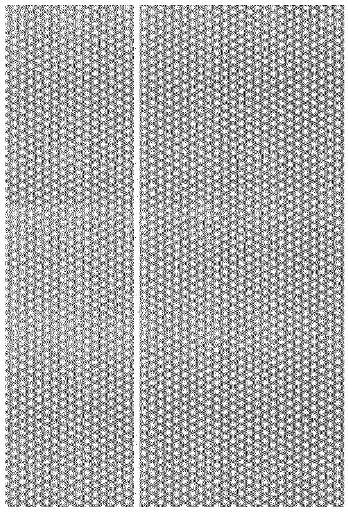

FIG. 4

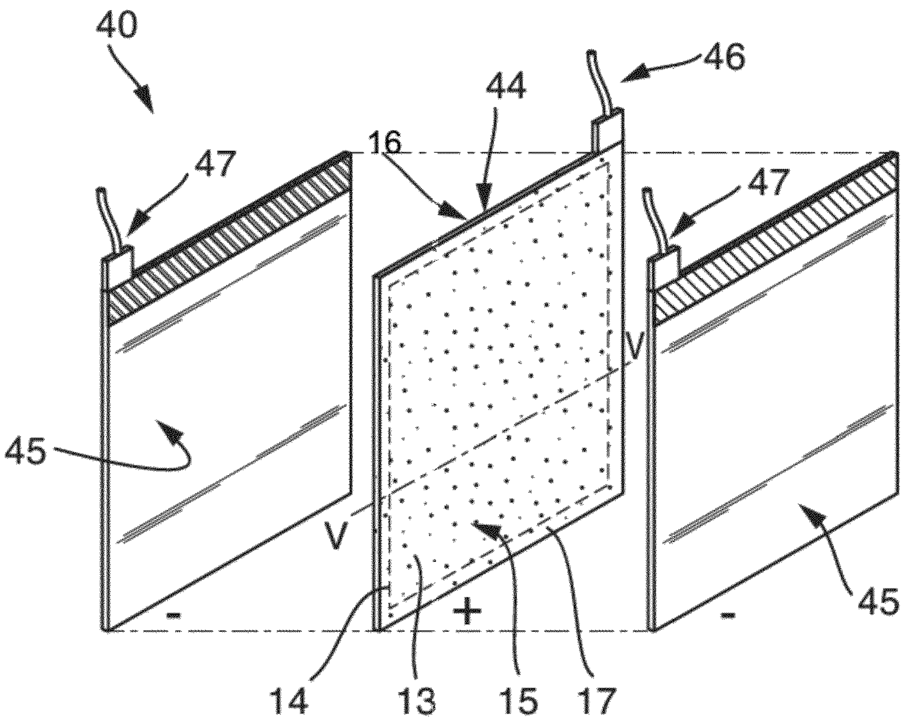


FIG. 5

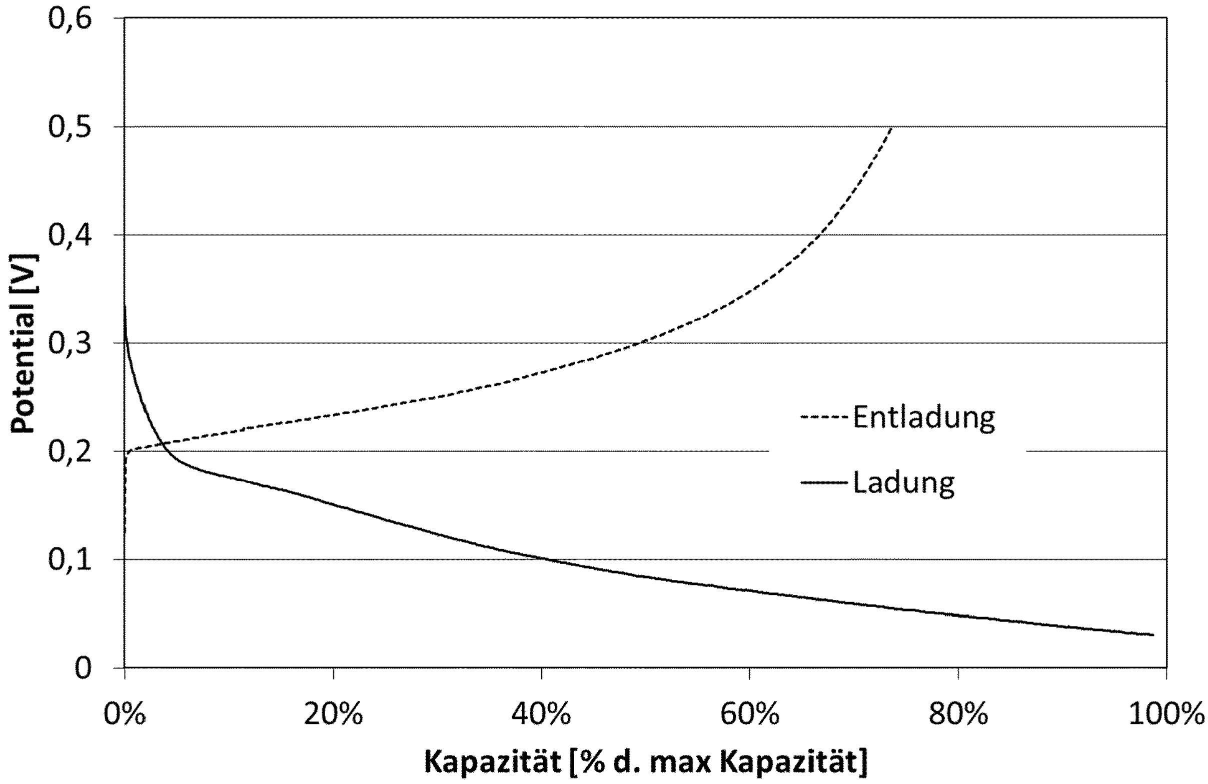
0,6
0,5
0,4
0,3
0,2
0,1
0
Potential [V]
Entladung
Ladung
0%
20%
40%
60%
80%
100%
Kapazität [% d. max Kapazität]

FIG. 6

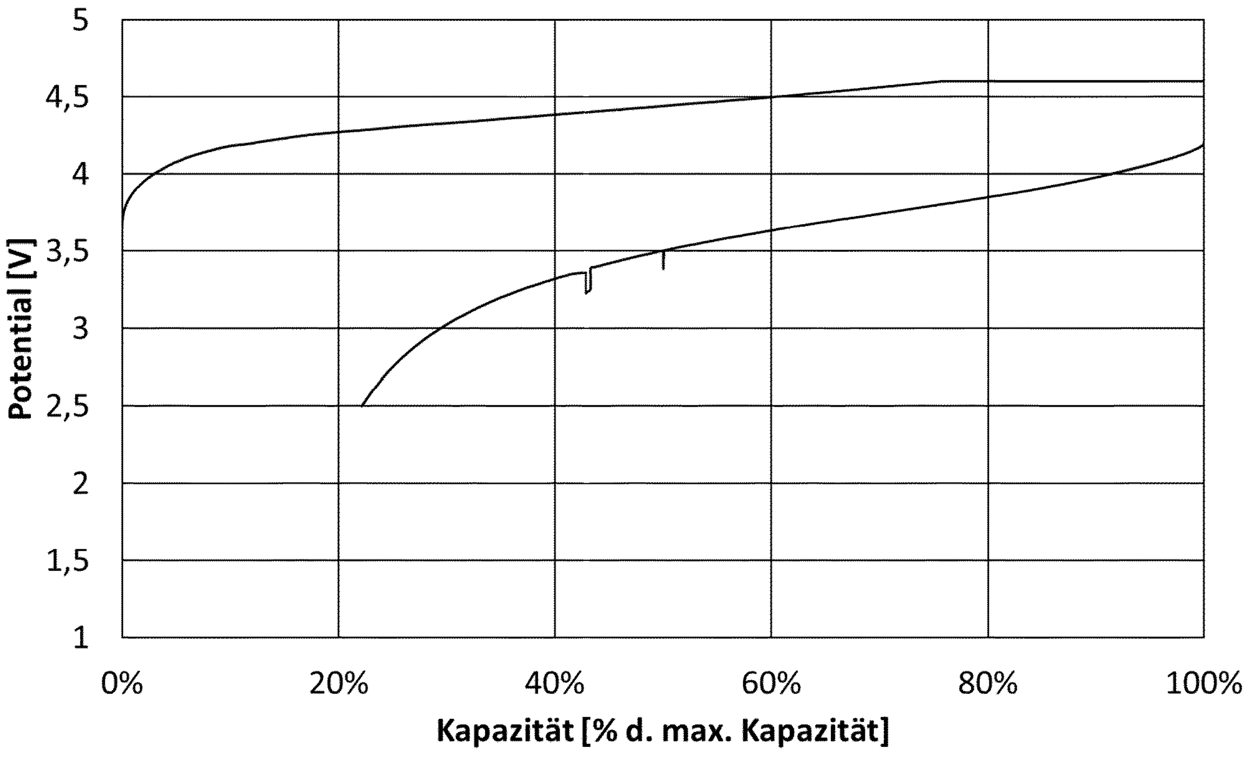
5
4,5
4
3,5
3
2,5
2
1,5
1
Potential [V]
0%
20%
40%
60%
80%
100%
Kapazität [% d. max. Kapazität]

FIG. 7

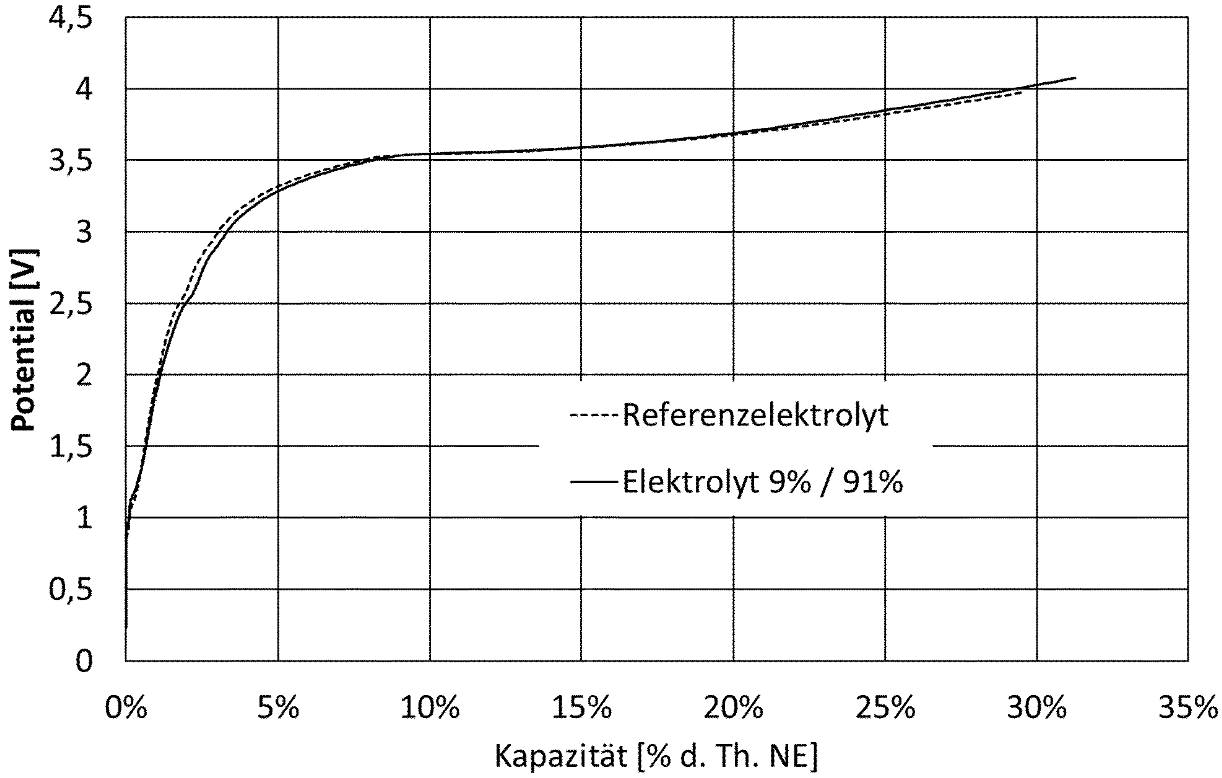
4,5
4
3,5
3
2,5
2
1,5
1
0,5
0
Potential [V]
0%
5%
10%
15%
20%
25%
30%
35%
Kapazität [% d. Th. NE]
Referenzelektrolyt
Elektrolyt 9% / 91%

FIG. 8

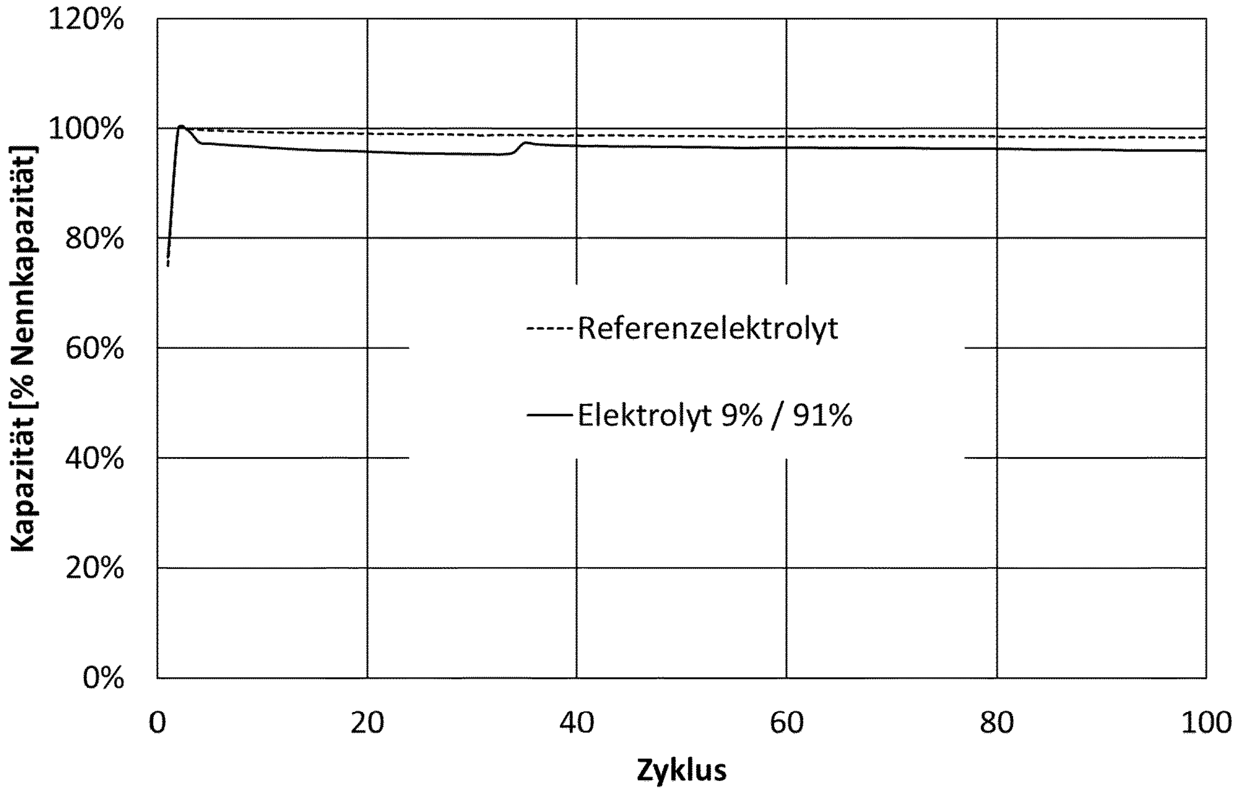
120%
100%
80%
60%
40%
20%
0%
Kapazität [% Nennkapazität]
0
20
40
60
80
100
Zyklus
Referenzelektrolyt
Elektrolyt 9% / 91%

FIG. 9

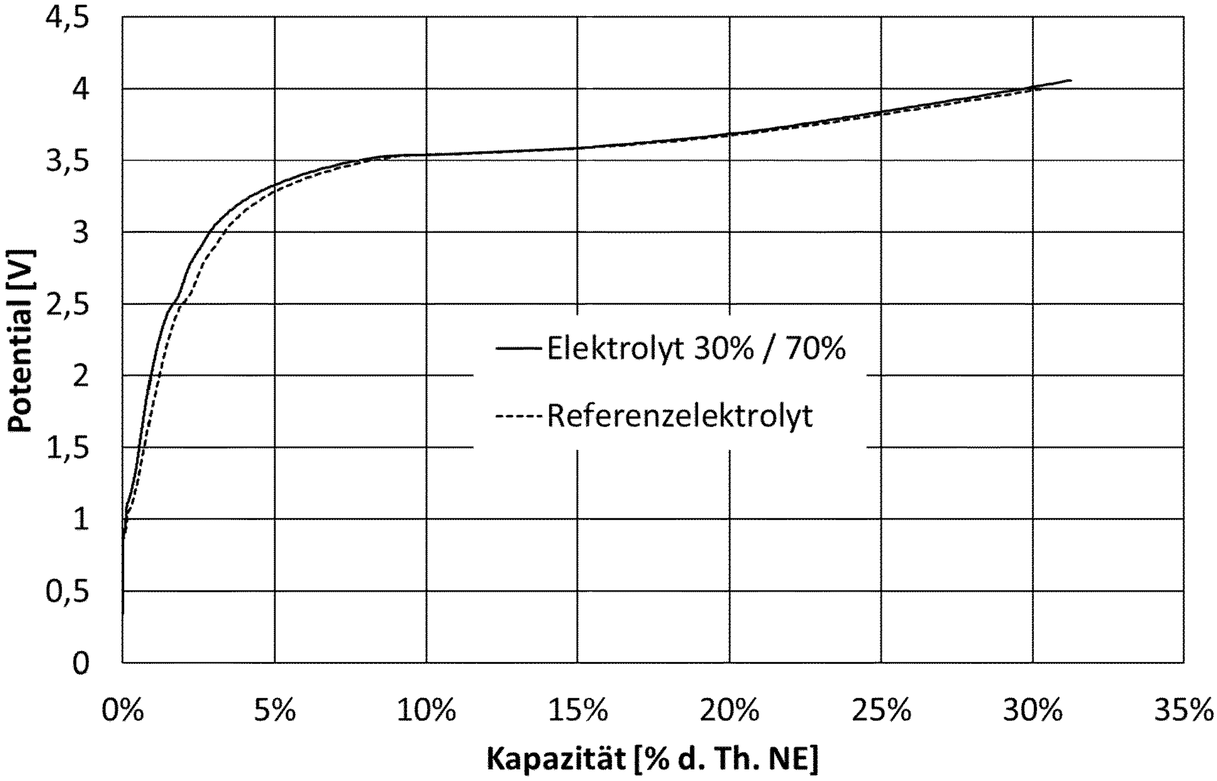
4,5
4
3,5
3
2,5
2
1,5
1
0,5
0
Potential [V]
Elektrolyt 30% / 70%
Referenzelektrolyt
0%
5%
10%
15%
20%
25%
30%
35%
Kapazität [% d. Th. NE]

FIG. 10

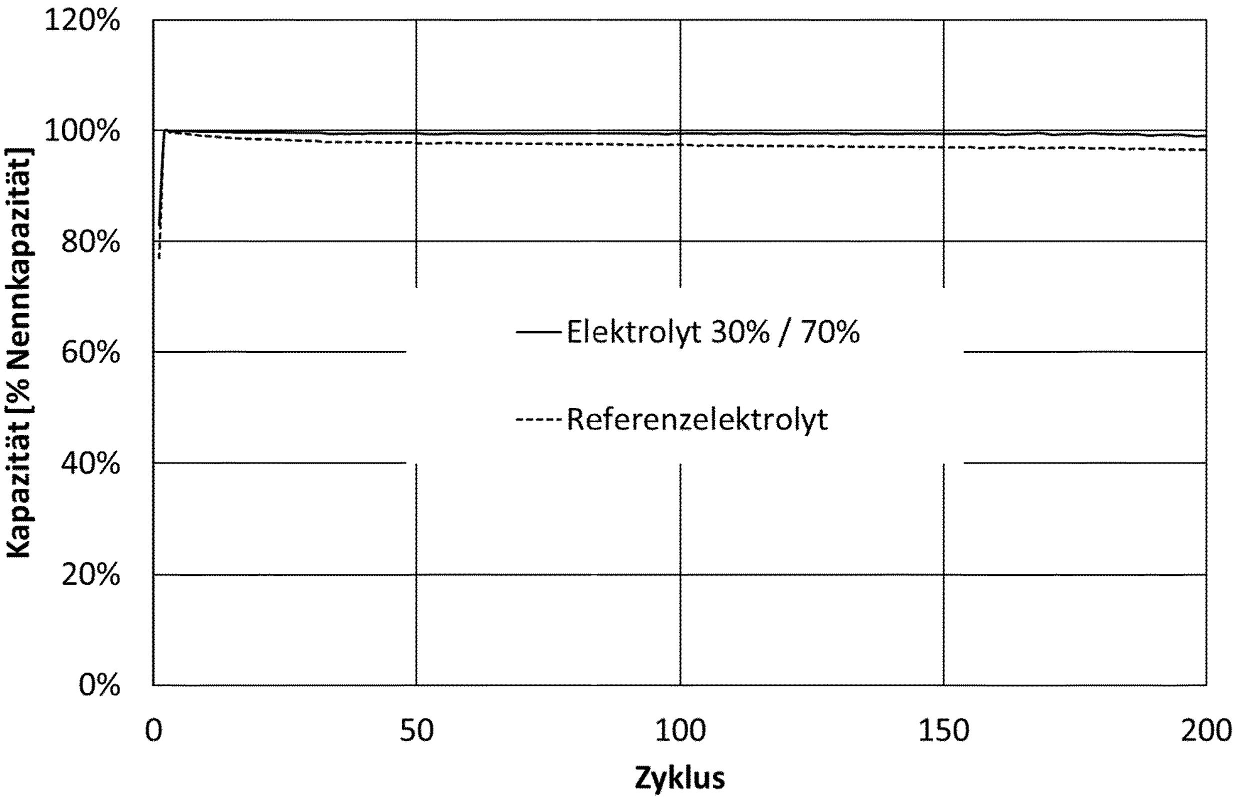
120%
100%
80%
60%
40%
20%
0%
Kapazität [% Nennkapazität]
Elektrolyt 30% / 70%
Referenzelektrolyt
0
50
100
150
200
Zyklus

FIG. 11

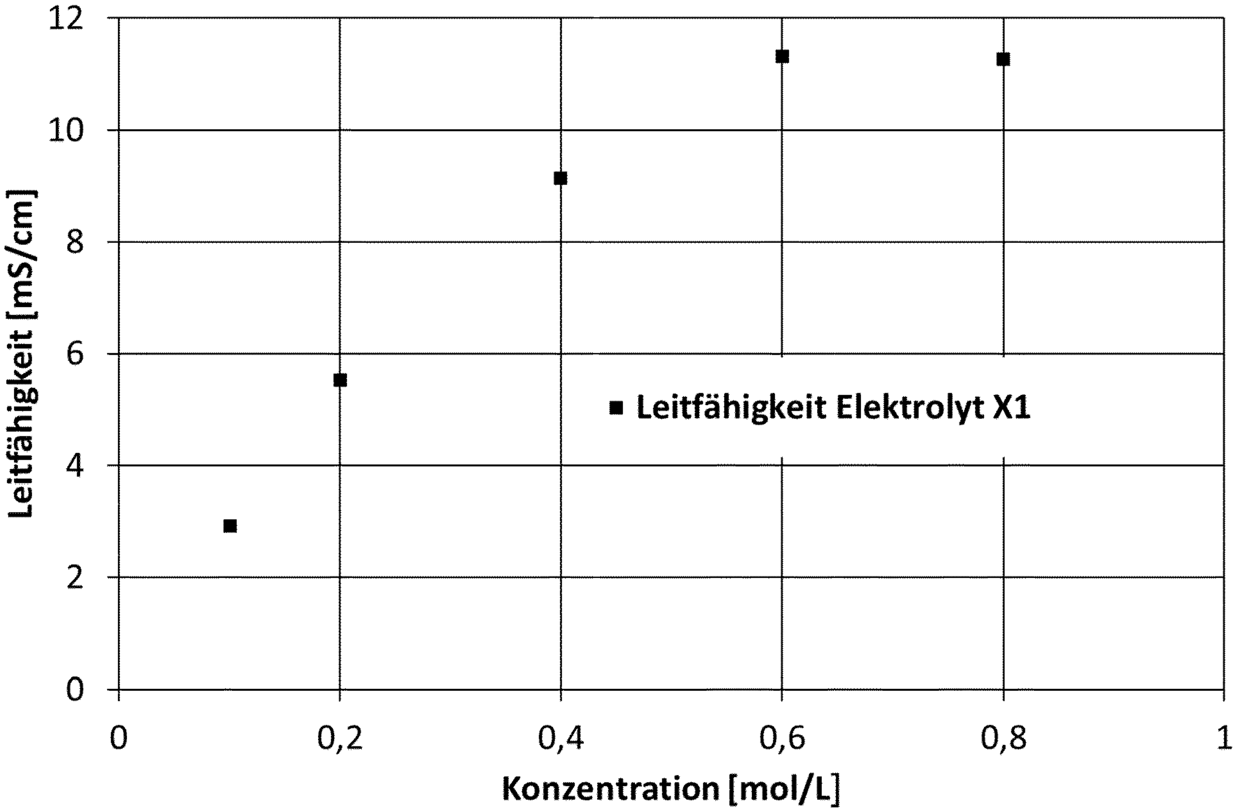
12
10
8
6
4
2
0
Leitfähigkeit [mS/cm]
0
0,2
0,4
0,6
0,8
1
Konzentration [mol/L]
Leitfähigkeit Elektrolyt X1

FIG. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 4306858 B
- JP 2001143750 A
- WO 2020013667 A1
- WO 2021006704 A1
- EP 1201004 B1
- EP 2534719 B1
- EP 3734724 A1
- US 4510220 A

### In der Beschreibung aufgeführte Nicht-Patentliteratur

- **I. KROSSING**. *Chem. Eur. J.*, 2001, vol. 7, 490
- **WU XU et al.** *Electrochem. Solid-State Lett.*, 2000, vol. 3, 366-368
- **A. MARTENS et al.** *Chem. Sci*, 2018, vol. 9, 7058-7068